# EUROPEAN PATENT APPLICATION

(11) **EP 4 535 864 A1**
(43) Date of publication of application: **09.04.2025**
(21) Application number: 23826356.0
(22) Date of filing: 19.06.2023
(51) Int. Cl.: H04W 36/00

(54) **MEASUREMENT CONFIGURATION METHOD AND COMMUNICATION APPARATUS**

(30) Priority: 24.06.2022 CN 202210738508
(71) Applicant: Huawei Technologies Co., Ltd., Shenzhen, Guangdong 518129 (CN)
(72) Inventor: WANG, Fanfan, Shenzhen, Guangdong 518129 (CN); HU, Xingxing, Shenzhen, Guangdong 518129 (CN); GENG, Tingting, Shenzhen, Guangdong 518129 (CN)
(74) Representative: Gill Jennings & Every LLP
(86) International application number: PCT/CN2023/101116
(87) International publication number: WO 2023/246708

(57) **Abstract**

A measurement configuration method and a communication apparatus are provided. The method includes: A source master node sends a CHO request to one or more candidate master nodes, receives a CHO request response sent by a first candidate master node, and sends a first RRC configuration message to a terminal device. The CHO request response includes a CHO configuration, a first CPAC configuration, and a to-be-measured frequency of a candidate secondary node. The first RRC configuration message includes the CHO configuration, a second CPAC configuration, and a measurement configuration. The measurement configuration includes a measurement object and a first measurement gap configuration. The measurement object includes a to-be-measured frequency of the source master node, a to-be-measured frequency of the first candidate master node, a to-be-measured frequency of a source secondary node, and the to-be-measured frequency of the candidate secondary node. According to the method in this application, when CHO and CPAC are configured for the terminal device, in addition to evaluating whether a trigger condition of the CHO is met, the terminal device further measures the to-be-measured frequency of the candidate secondary node, to complete the CPAC more quickly. This helps the terminal device access a more proper primary cell and a more proper primary secondary cell.

## Description

### CROSS-REFERENCE TO RELATED APPLICATIONS

This application claims priority to Chinese Patent Application No. 202210738508.6, filed with the China National Intellectual Property Administration on June 24, 2022 and entitled "MEASUREMENT CONFIGURATION METHOD AND COMMUNICATION APPARATUS", which is incorporated herein by reference in its entirety.

### TECHNICAL FIELD

This application relates to the field of cell handover technologies, and in particular, to a measurement configuration method and a communication apparatus.

### BACKGROUND

One terminal device may simultaneously access two or more nodes. One terminal device simultaneously accesses a master node (master node, MN) and one secondary node (secondary node, SN), which may be referred to as dual-connectivity (dual-connectivity, DC). One terminal device simultaneously accesses an MN and at least two SNs, which may be referred to as multi-connectivity (multi-connectivity, MC). In the DC or the MC, there is a control plane signaling connection between the MN and a core network. The MN provides a master cell group (master cell group, MCG) for the terminal device, and the MCG includes a primary cell (primary cell, PCell). The SN provides a secondary cell group (secondary cell group, SCG) for the terminal device, and the SCG includes a primary secondary cell (primary secondary cell, PSCell).

When performing cell handover, the terminal device needs to measure a to-be-measured frequency (frequency to be measured) based on a measurement configuration, to determine whether a handover execution trigger condition is met. When conditional handover (conditional handover, CHO) and conditional primary secondary cell addition and change (conditional PSCell addition and change, CPAC) are configured for the terminal device, the terminal device needs to determine whether a candidate MN meets an execution trigger condition of the CHO and whether a candidate SN of the candidate MN meets an execution trigger condition of the CPAC. However, the MN considers only a CHO measurement configuration requirement, but does not consider a CPAC measurement configuration requirement. As a result, the terminal device may measure only a part of to-be-measured SN frequencies of the CPAC, or may measure no to-be-measured SN frequency of the CPAC. This reduces a CPAC trigger opportunity.

### SUMMARY

This application provides a measurement configuration method and a communication apparatus, to increase a CPAC trigger opportunity when CHO and CPAC are configured for a terminal device, so as to complete the CPAC more quickly.

According to a first aspect, an embodiment of this application provides a measurement configuration method. The method may be performed by a first communication apparatus. The first communication apparatus may be a communication device or a communication apparatus, for example, a chip system, that can support the communication device in implementing a function needed in the method. An example in which the communication device is a source master node is used below for description. For example, the first communication apparatus is the source master node, a chip disposed in the source master node, or another component configured to implement a function of the source master node.

The measurement configuration method includes: The source master node sends a CHO request to one or more candidate master nodes, receives a CHO request response sent by a first candidate master node, and sends a first radio resource control (radio resource control, RRC) configuration message to a terminal device. The first candidate master node belongs to the one or more candidate master nodes. The CHO request response includes a CHO configuration, a first CPAC configuration, and a to-be-measured frequency of a candidate secondary node. The first RRC configuration message includes the CHO configuration, a second CPAC configuration, and a measurement configuration. The second CPAC configuration is determined based on the first CPAC configuration. The measurement configuration includes a measurement object and a first measurement gap (gap) configuration corresponding to the measurement object. The measurement object includes a to-be-measured frequency of the source master node, a to-be-measured frequency of the first candidate master node, a to-be-measured frequency of a source secondary node, and the to-be-measured frequency of the candidate secondary node.

In the method, the first candidate master node is a candidate master node that receives the CHO request from the source master node. After receiving the CHO request, the first candidate master node may initiate a conditional primary secondary cell addition (conditional PSCell addition, CPA) request or initiate a conditional primary secondary cell change (conditional PSCell change, CPC) request to the candidate secondary node, to obtain the to-be-measured frequency of the candidate secondary node. The first candidate master node may feed back the obtained to-be-measured frequency of the candidate secondary node to the source master node, so that the source master node can subsequently configure a proper measurement object and measurement gap (gap) based on the to-be-measured frequency of the source master node, the to-be-measured frequency of the candidate master node, the to-be-measured frequency of the source secondary node, and the to-be-measured frequency of the candidate secondary node. According to the method, when evaluating whether a trigger condition of CHO is met, in addition to measuring the to-be-measured frequency of the candidate master node, the terminal device may further measure the to-be-measured frequency of the candidate secondary node, that is, may further evaluate whether a trigger condition of CPAC is met, to increase a CPAC trigger opportunity, so as to help the terminal device complete the CPAC more quickly. In addition, this helps the terminal device access a more proper cell, so that communication quality after the terminal device accesses the cell can be improved.

In a possible implementation, the method further includes: The source master node determines the first measurement gap configuration based on the measurement object, and sends the first measurement gap configuration and a measurement gap type to the source secondary node, where the measurement gap type includes a measurement type configured for the terminal device or a measurement gap type configured for a frequency range. The measurement gap is duration from time at which the terminal device stops communication with a serving cell to time at which the terminal device measures a frequency of a neighboring cell. In the measurement gap, the terminal device does not send or receive data, but adjusts a receiver to a to-be-measured frequency to perform frequency measurement. When the measurement gap ends, the terminal device adjusts the receiver to a frequency of the serving cell.

In the method, the source master node may configure the measurement gap based on the measurement object, for example, the to-be-measured frequency of the source master node, the to-be-measured frequency of the candidate master node, the to-be-measured frequency of the source secondary node, and the to-be-measured frequency of the candidate secondary node. In other words, the source master node configures the measurement gap based on a plurality of to-be-measured frequencies, to avoid a case in which a part of the to-be-measured frequencies cannot be measured because the configured measurement gap is insufficient to measure the part of the to-be-measured frequencies. In addition, the source master node may further provide the first measurement gap configuration and the measurement gap type for the source secondary node, to assist the source secondary node in determining, based on the first measurement gap configuration and the measurement gap type, whether to configure a gap for the terminal device and a type of the gap to be configured. For example, in an evolved universal terrestrial radio access new radio dual connectivity (E-UTRA NR dual connectivity, EN-DC) scenario or a next generation radio access network evolved universal terrestrial radio access dual connectivity (next generation-RAN E-UTRA dual connectivity, NGEN-DC) scenario, the first measurement gap configuration is a gap configuration of a first frequency range (frequency range, FR). If the measurement gap type is a measurement gap type for the first FR, the source secondary node may further configure gap measurement of another FR for the terminal device, for example, gap measurement of a second FR. The first FR is also referred to as an FR1, and the second FR is also referred to as an FR2. The FR1 has a lowest frequency of 450 MHz and a highest frequency of 6 GHz. The FR2 has a lowest frequency of 24.25 GHz and a highest frequency of 52.6 GHz.

In a possible implementation, the CHO request response further includes a second measurement gap configuration, and the second measurement gap configuration is determined based on the to-be-measured frequency of the first candidate master node and the to-be-measured frequency of the candidate secondary node. The method further includes: The source master node determines the first measurement gap configuration based on the second measurement gap configuration, and sends the first measurement gap configuration and a measurement gap type to the source secondary node, where the measurement gap type includes a measurement type configured for the terminal device or a measurement gap type configured for a frequency range. The first candidate master node may further configure a gap, for example, a second measurement gap, based on the to-be-measured frequency of the first candidate master node and the to-be-measured frequency of the candidate secondary node, and provide the gap for the source master node. The source master node may configure a more proper gap for the terminal device based on the second measurement gap. For example, if a first measurement gap is greater than the second measurement gap, the source master node may configure the first measurement gap for the terminal device. On the contrary, if the second measurement gap is greater than the first measurement gap, the source master node may configure the second measurement gap for the terminal device. In this way, more to-be-measured frequencies can be measured, to avoid missing measurement of a to-be-measured frequency with good communication quality.

In a possible implementation, the CHO request response further includes a third measurement gap configuration, and the third measurement gap configuration is configured based on a frequency, in an FR2, in the to-be-measured frequency of the candidate secondary node. If the first candidate master node obtains the third measurement gap configuration, the first candidate master node may provide the third measurement gap configuration for the source master node, so that the source master node provides the third measurement gap configuration for the source secondary node, to assist the source secondary node in configuring a measurement gap of the FR2 for the terminal device.

In a possible implementation, the method further includes: The source master node sends measurement frequency information to the source secondary node, where the measurement frequency information indicates a frequency, in an FR2, in the to-be-measured frequency of the candidate secondary node. The source master node provides the to-be-measured frequency in the FR2 for the source secondary node, so that the source secondary node can configure a measurement gap of the FR2 for the terminal device based on the to-be-measured frequency in the FR2, to be applied to measurement gap configuration in more scenarios. For example, the source master node is responsible for a gap configuration in an FR1, and the secondary node may be responsible for a gap configuration in the FR2, so that the source master node and the source secondary node can negotiate to complete the gap configuration, so as to implement measurement gap configuration in an EN-DC scenario and an NGEN-DC scenario.

In a possible implementation, the method further includes: The source master node determines a fourth measurement gap configuration based on the to-be-measured frequency of the candidate secondary node, where the to-be-measured frequency of the candidate secondary node is a frequency in an FR1.

In a possible implementation, the CHO request response includes an identifier and/or a data forwarding address of the candidate secondary node. In other words, the first candidate master node may provide the identifier and/or the data forwarding address of the candidate secondary node for the source master node. When notifying the source secondary node to perform data forwarding, the source master node provides the identifier and/or the data forwarding address of the candidate secondary node for the source secondary node. Therefore, the source secondary node forwards data to the candidate secondary node based on the identifier and/or the data forwarding address of the candidate secondary node, so that direct data forwarding of the CPAC can be implemented.

In a possible implementation, the first RRC configuration message has the following three implementation forms. A specific implementation form is not limited in this embodiment of this application.

Implementation form 1: The first RRC configuration message includes a second RRC configuration message and a first execution trigger condition corresponding to the first candidate master node. The second RRC configuration message includes a radio air interface configuration of the first candidate master node and a second execution trigger condition corresponding to a candidate PSCell, and an information element other than the second RRC configuration message in the first RRC configuration message further includes identification information of the candidate PSCell and the second execution trigger condition corresponding to the candidate PSCell. The candidate PSCell is managed by the candidate secondary node. The first execution trigger condition is the execution trigger condition of the CHO, that is, a trigger condition that needs to be met when the terminal device is handed over to a PCell managed by the first candidate master node. The terminal device triggers a procedure of handover to one PCell only when a first execution trigger condition corresponding to the PCell is met. Similarly, the second execution trigger condition is the execution trigger condition of the CPAC, that is, a trigger condition that needs to be met when the terminal device is handed over to a PSCell managed by the candidate secondary node. The terminal device triggers a procedure of handover to one PSCell only when a second execution trigger condition corresponding to the PSCell is met. In the implementation 1, when evaluating the execution trigger condition of the CHO and the execution trigger condition of the CPAC, the terminal device only needs to obtain the second execution trigger condition from the first RRC configuration message, and does not need to parse the second RRC configuration message. If the CHO is triggered, but the CPAC is not triggered, after successfully performing primary cell handover, the terminal device may delete a configuration for the first execution trigger condition in the first RRC configuration message, that is, retain only the second RRC configuration message, so that the CPAC evaluation can be subsequently performed based on an existing CPAC configuration.

Implementation form 2: The first RRC configuration message includes a second RRC configuration message and a first execution trigger condition corresponding to the first candidate master node, where the second RRC configuration message includes a radio air interface configuration of the first candidate master node and a second execution trigger condition corresponding to a candidate PSCell, and an information element other than the second RRC configuration message in the first RRC configuration message does not include identification information of the candidate PSCell or the second execution trigger condition corresponding to the candidate PSCell. The candidate PSCell is managed by the candidate secondary node. In the implementation 2, if the CHO is triggered, but the CPAC is not triggered, after successfully performing primary cell handover, the terminal device may retain only the second RRC configuration message, and does not need to retain a configuration for the first execution trigger condition in the first RRC configuration message, so that the CPAC evaluation can be subsequently performed based on an existing CPAC configuration.

Implementation form 3: The first RRC configuration message includes a second RRC configuration message and a first execution trigger condition corresponding to the first candidate master node, where the second RRC configuration message includes a radio air interface configuration of the first candidate master node and a radio air interface configuration of the candidate secondary node, the second RRC configuration message does not include a second execution trigger condition corresponding to a candidate PSCell, and an information element other than the second RRC configuration message in the first RRC configuration message further includes identification information of the candidate PSCell and the second execution trigger condition corresponding to the candidate PSCell. The candidate PSCell is managed by the candidate secondary node. In the implementation form 3, when evaluating the execution trigger condition of the CHO and the execution trigger condition of the CPAC, the terminal device only needs to obtain the second execution trigger condition from the first RRC configuration message, and does not need to parse the second RRC configuration message.

According to a second aspect, an embodiment of this application provides a measurement configuration method. The method may be performed by a second communication apparatus. The second communication apparatus may be a communication device or a communication apparatus, for example, a chip system, that can support the communication device in implementing a function needed in the method. An example in which the communication device is a candidate master node is used below for description. For example, the second communication apparatus is the candidate master node, a chip disposed in the candidate master node, or another component configured to implement a function of the candidate master node.

The measurement configuration method includes: The candidate master node receives a CHO request sent by a source master node, and sends a CHO request response to the source master node. The CHO request response includes a CHO configuration, a first CPAC configuration, and a to-be-measured frequency of a candidate secondary node.

In a possible implementation, the method further includes: The candidate master node sends a CPA request to the candidate secondary node, and receives a CPA request response sent by the candidate secondary node; or the candidate master node sends a CPC request to the candidate secondary node, and receives a CPC request response sent by the candidate secondary node. The CPA request response or the CPC request response includes the to-be-measured frequency of the candidate secondary node.

In a possible implementation, the to-be-measured frequency of the candidate secondary node included in the CHO request response is all to-be-measured frequencies of the candidate secondary node.

In a possible implementation, the CHO request response includes an identifier and/or a data forwarding address of the candidate secondary node.

In a possible implementation, the method further includes: The candidate master node determines a measurement gap configuration based on the to-be-measured frequency of the candidate secondary node, and sends the measurement gap configuration to the source master node.

For technical effects brought by the second aspect and the possible implementations of the second aspect, refer to descriptions of technical effects of the first aspect and the possible implementations of the first aspect.

According to a third aspect, an embodiment of this application provides a communication apparatus. The communication apparatus has a function of implementing behavior in the method embodiment of either of the first aspect and the second aspect. For beneficial effects, refer to descriptions of the first aspect and the second aspect. Details are not described herein again.

The communication apparatus may be an access network device, configured to perform the method performed by the source master node in the first aspect, or the communication apparatus may be an apparatus that can implement the method provided in the first aspect, for example, a chip or a chip system. In a possible design, the communication apparatus includes a corresponding means (means) or module configured to perform the method in the first aspect. For example, the communication apparatus includes a processing unit (also referred to as a processing module or a processor sometimes) and/or a transceiver unit (also referred to as a transceiver module or a transceiver sometimes). The transceiver unit may include a sending unit and a receiving unit, or it may be understood as that the sending unit and the receiving unit are a same functional module. Alternatively, the transceiver unit is understood as a general term of the sending unit and the receiving unit, and the sending unit and the receiving unit may be different functional modules. These units (modules) may perform corresponding functions in the method example in the first aspect. For details, refer to the detailed descriptions in the method example. Details are not described herein again.

The communication apparatus may be an access network device, configured to perform the method performed by the candidate master node in the second aspect, or the communication apparatus may be an apparatus that can implement the method provided in the second aspect, for example, a chip or a chip system. In a possible design, the communication apparatus includes a corresponding means (means) or module configured to perform the method in the second aspect. For example, the communication apparatus includes a processing unit (also referred to as a processing module or a processor sometimes) and/or a transceiver unit (also referred to as a transceiver module or a transceiver sometimes). The transceiver unit may include a sending unit and a receiving unit, or it may be understood as that the sending unit and the receiving unit are a same functional module. Alternatively, the transceiver unit is understood as a general term of the sending unit and the receiving unit, and the sending unit and the receiving unit may be different functional modules. These units (modules) may perform corresponding functions in the method example in the second aspect. For details, refer to the detailed descriptions in the method example. Details are not described herein again.

According to a fourth aspect, an embodiment of this application provides a communication apparatus. The communication apparatus may perform the method in either of the first aspect and the second aspect. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the source master node or the candidate master node in the foregoing methods.

According to a fifth aspect, an embodiment of this application provides a communication apparatus. The communication apparatus includes an input/output interface and a logic circuit. The input/output interface is configured to input and/or output information. The logic circuit is configured to perform the method in either of the first aspect and the second aspect.

According to a sixth aspect, an embodiment of this application provides a chip system. The chip system includes a processor, and may further include a memory and/or a communication interface, to implement the method in either of the first aspect and the second aspect. In a possible implementation, the chip system further includes the memory, configured to store a computer program. The chip system may include a chip, or may include a chip and another discrete device.

According to a seventh aspect, an embodiment of this application provides a communication system. The communication system includes a source master node, a candidate master node, and a terminal device. The source master node is configured to perform the method performed by the source master node in the first aspect, and the candidate master node is configured to perform the method performed by the candidate master node in the second aspect. Certainly, the communication system may include more nodes, for example, a source secondary node and a candidate secondary node.

According to an eighth aspect, this application provides a computer-readable storage medium. The computer-readable storage medium stores a computer program. When the computer program is run, the method in either of the first aspect and the second aspect is implemented.

According to a ninth aspect, a computer program product is provided. The computer program product includes computer program code. When the computer program code is run, the method in either of the first aspect and the second aspect is performed.

For beneficial effects of the third aspect to the ninth aspect and the implementations of the third aspect to the ninth aspect, refer to descriptions of beneficial effects of the first aspect and the second aspect and the implementations of the first aspect and the second aspect.

### BRIEF DESCRIPTION OF DRAWINGS

FIG. 1 is a diagram of a communication system to which an embodiment of this application is applicable;
FIG. 2 is a schematic flowchart of a measurement configuration method according to an embodiment of this application;
FIG. 3 is a schematic flowchart of a measurement configuration method in a first example according to an embodiment of this application;
FIG. 4 is a schematic flowchart of a measurement configuration method in a second example according to an embodiment of this application;
FIG. 5A and FIG. 5B are a schematic flowchart of a measurement configuration method in a third example according to an embodiment of this application;
FIG. 6A and FIG. 6B are a schematic flowchart of a measurement configuration method in a fourth example according to an embodiment of this application;
FIG. 7 is a block diagram of a communication apparatus according to an embodiment of this application; and
FIG. 8 is another block diagram of a communication apparatus according to an embodiment of this application.

### DESCRIPTION OF EMBODIMENTS

The technical solutions provided in embodiments of this application may be applied to a new radio (new radio, NR) mobile communication system, may be applied to a long term evolution (long term evolution, LTE) mobile communication system, or may be applied to another next-generation mobile communication system, for example, a sixth generation (sixth generation, 6G) communication system or another similar communication system. The technical solutions provided in embodiments of this application may alternatively be applied to an internet of things (internet of things, IoT) system, a vehicle-to-everything (vehicle to everything, V2X) system, or the like.

In embodiments of this application, one terminal device may communicate with a plurality of network devices. One network device is a master network device, and another network device is a secondary network device. The master network device is a network device that exchanges control plane signaling with a core network. There is a communication connection between the terminal device and the master network device. The terminal device may establish a communication connection to a part of a plurality of secondary network devices, or may establish communication connections to all of the plurality of secondary network devices. The master network device and the secondary network device each have a radio resource control (radio resource control, RRC) entity, and may generate an RRC message (for example, a cell measurement message). The secondary network device may directly send the RRC message generated by the secondary network device to the terminal device. Correspondingly, the terminal device may also directly send a generated RRC message to the secondary network device. Alternatively, the secondary network device may send the generated RRC message to the master network device, and then the master network device sends the RRC message to the terminal device. Correspondingly, the terminal device sends, to the master network device, an RRC message to be sent to the secondary network device, and then the master network device forwards the RRC message to the secondary network device.

In an example, embodiments of this application may be applied to a DC scenario or an MC scenario. DC means that one terminal device simultaneously accesses two network devices, where one of the two network devices is a master network device, and the other network device is a secondary network device. MC means that one terminal device simultaneously accesses at least three network devices, where one of the at least three network devices is a master network device, and other network devices are secondary network devices.

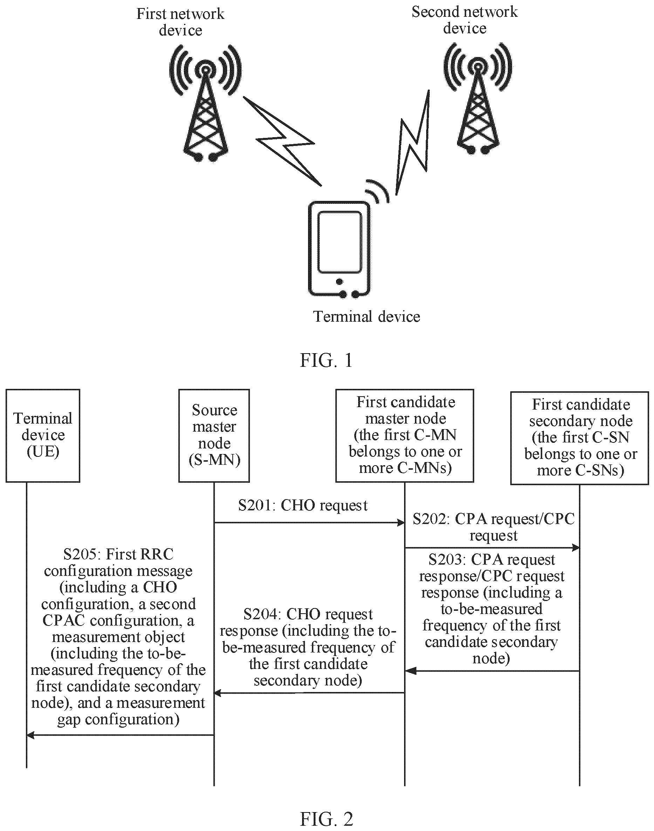

FIG. 1 is a diagram of an architecture of a DC scenario to which an embodiment of this application is applicable. In FIG. 1, an example in which a terminal device and two network devices (that is, a first network device and a second network device) are included is used. The first network device is a master network device, that is, an MN, and the second network device is a secondary network device, that is, an SN. The first network device and the second network device may be network devices that belong to a same radio access technology (radio access technology, RAT). For example, the first network device and the second network device each are an LTE base station or an NR base station. Alternatively, the first network device and the second network device may be network devices that belong to different RATs. For example, the first network device is an LTE base station, and the second network device is an NR base station. Because an LTE system may be an evolved universal terrestrial radio access (evolved universal terrestrial radio access, E-UTRA) system, an access manner in which the terminal device simultaneously accesses the LTE base station and the NR base station is also referred to as EN-DC. The EN-DC is dual connectivity between a 4G radio access network and 5G NR that are connected to a 4G core. In an EN-DC mode, the MN is an LTE base station connected to an evolved packet core (evolved packet core, EPC), and the SN is an NR base station. In another DC scenario, the terminal device supports new radio evolved universal terrestrial radio access dual connectivity (NR E-UTRA dual connectivity, NE-DC). In the scenario, the MN is an NR base station connected to a 5G core (5G core, 5GC), and the SN is an LTE base station. A DC mode in which the MN and the SN use different RATs may be collectively referred to as multi-radio access technology dual connectivity (Multi-RAT dual connectivity, MR-DC). The MR-DC has different types, for example, the EN-DC or next generation radio access network evolved universal terrestrial radio access dual connectivity (next generation-RAN E-UTRA dual connectivity, NGEN-DC), that is, dual connectivity between a 4G radio access network and 5G NR that are connected to the 5G core. In addition, in still another DC scenario, for a terminal device that supports only NR, the terminal device may simultaneously access two different NR network devices. This type of connection manner is referred to as NR-DC. In the NR-DC, the MN is an NR base station connected to a 5GC, and the SN is another NR base station.

FIG. 1 is used as an example. When both an NR system and the LTE system are deployed, the first network device is the LTE base station, and the second network device is the NR base station. It should be noted that the network architecture of the DC is used as an example in FIG. 1. A quantity of terminal devices in FIG. 1 is merely an example, and there may be more or fewer terminal devices. A quantity of network devices is also merely an example, and there may be more or fewer network devices. The communication system in FIG. 1 may further include more devices, for example, one or more core network devices, for example, an LTE core network device and an NR core network device. It may be understood that the LTE core network device may communicate with an LTE network device. The NR core network device may communicate with an NR network device and/or the LTE network device. In embodiments of this application, a master node (that is, a node that provides a service for the terminal device) connected to the terminal device is referred to as a source master node (source MN, S-MN). Relatively speaking, another master node may be understood as a candidate master node (candidate MN, C-MN), and there may be one or more C-MNs. A secondary node connected to the terminal device is referred to as a source secondary node (source SN, S-SN). Relatively speaking, another secondary node is a candidate secondary node (candidate SN, C-SN), and there may be one or more C-SNs. The "source master node", a "source base station", and a "source network device" are a same concept, and can be replaced with each other unless otherwise specified. The "source secondary node", a "source secondary base station", and a "source secondary network device" are a same concept, and can be replaced with each other unless otherwise specified. The "candidate master node", a "candidate master base station", and a "candidate master network device" are a same concept, and can be replaced with each other unless otherwise specified. The "candidate secondary node", a "candidate secondary base station", and a "candidate secondary network device" are a same concept, and can be replaced with each other unless otherwise specified.

One or more cells (cells) in which the MN provides a service for the terminal device are referred to as MCGs. When there is only one cell in the MCG, the cell is a PCell of the terminal device. One MN may provide one or more MCGs. One or more cells in which the SN provides a service for the terminal device are referred to as SCGs. When there is only one cell in the SCG, the cell is a PSCell of the terminal device. One SN may provide one or more SCGs. In a 5G system, the PCell and the PSCell may be collectively referred to as special cells (special cells, SpCells). When one MCG or one SCG includes a plurality of cells, one cell in each of the MCG and the SCG is a SpCell, and a cell other than the SpCell is referred to as a secondary cell (secondary cell, SCell). In this case, carrier aggregation is performed between SCells and SpCells in cell groups to jointly provide a service for the terminal device.

The PCell is a cell working on a primary frequency (or a primary component carrier). The terminal device initiates an initial connection establishment process or initiates a connection re-establishment process in the PCell. In a handover process, the PCell is indicated as a primary cell.

The PSCell may also be referred to as a primary SCG cell (primary SCG cell), and is a cell of the SCG. The PSCell may include a cell in which the terminal device is indicated to perform random access or initial physical uplink shared channel (physical uplink shared channel, PUSCH) transmission. For example, a cell in a random access process is omitted when an SCG change procedure is performed. The PSCell also includes a cell in which the terminal device initiates a random access process in the secondary network device, a cell in which the terminal device skips a random access process in a secondary network device change process to initiate data transmission, or a cell of a secondary network device to which the terminal device initiates random access in a synchronous reconfiguration process.

The secondary cell (secondary cell, SCell) is a cell working on a secondary component carrier. Once an RRC connection is established, the SCell may be configured to provide an additional radio resource. In the DC architecture, a cell other than the primary cell in the MCG and the SCG may be referred to as the SCell.

A serving cell (serving cell) may be the primary cell, or may be the secondary cell. The primary cell and all secondary cells of the terminal device form a serving cell set of the terminal device. If carrier aggregation (carrier aggregation, CA) and/or DC are/is not configured for a terminal device in an RRC connected (RRC_CONNECTED) mode, there is only one serving cell, that is, a PCell. If CA and/or DC are/is configured, a serving cell set includes a primary cell and a secondary cell. Each component carrier (component carrier, CC) corresponds to one independent cell.

In embodiments of this application, the network device may be an access device in a mobile communication system accessed by the terminal device in a wireless manner, for example, an access network (access network, AN) device like a base station. Alternatively, the network device may be a device that communicates with the terminal device over an air interface. The network device may include an evolved NodeB (evolved NodeB, eNB or e-NodeB) in the LTE system or a long term evolution-advanced (long term evolution-advanced, LTE-A) system. The network device may alternatively include a next generation NodeB (next generation NodeB, gNB) in the NR system. The network device may alternatively include an access node or the like in a wireless-fidelity (wireless-fidelity, Wi-Fi) system. The network device may alternatively be a station (station), a relay station, a vehicle-mounted device, a future evolved public land mobile network (Public Land Mobile Network, PLMN) device, a device in a device-to-device (device to device, D2D) network, a device in a machine-to-machine (machine to machine, M2M) network, a device in an IoT network, an uncrewed aerial vehicle, or the like. An access network device in the V2X system may be a road side unit (road side unit, RSU). A specific technology and a specific device form that are used by the network device are not limited in embodiments of this application.

In addition, the base station in embodiments of this application may include a central unit (central unit, CU) and a distributed unit (distributed unit, DU), and a plurality of DUs may be centrally controlled by one CU. The CU and the DU may be obtained through division based on a protocol layer function that the CU and the DU each have in a wireless network. For example, functions of a packet data convergence protocol (packet data convergence protocol, PDCP) layer and a protocol layer above the packet data convergence protocol layer are set on the CU, and functions of protocol layers below the PDCP layer, for example, a radio link control (radio link control, RLC) layer and a medium access control (medium access control, MAC) layer, are set on the DU. It should be noted that such division into the protocol layers is merely an example, and there may be other division of protocol layers. A radio frequency apparatus may not be disposed in the DU but is disposed remotely from the DU, or may be integrated into the DU, or a part of the radio frequency apparatus is disposed remotely from the DU and a remaining part is integrated into the DU. This is not limited in embodiments of this application. In addition, in some embodiments, a control plane (control plane, CP) and a user plane (user plane, UP) of the CU may be further separated into different entities for implementation, where the entities are respectively a control-plane CU entity (CU-CP entity) and a user-plane CU entity (CU-UP entity). The control plane CU-CP of the CU further includes a further split architecture, that is, an existing CU-CP is further split into a CU-CP 1 and a CU-CP 2. The CU-CP 1 includes various radio resource management functions, and the CU-CP 2 includes only an RRC function and a PDCP-C function (that is, a basic function of control plane signaling at the PDCP layer). In the network architecture, signaling generated by the CU may be sent to the terminal device through the DU, or signaling generated by the terminal device may be sent to the CU through the DU. The DU may transparently transmit the signaling to the terminal device or the CU by directly encapsulating the signaling at the protocol layer without parsing the signaling.

In embodiments of this application, the terminal device is a device with a wireless transceiver function, and may send a signal to the network device, or receive a signal from the network device. The terminal device may include user equipment (user equipment, UE), and is also referred to as a terminal, an access station, a UE station, a remote station, a wireless communication device, a user apparatus, or the like sometimes. The terminal device is configured to connect a person, an object, a machine, and the like, may be widely used in various scenarios, and includes, for example, but is not limited to terminal devices in the following scenarios: cellular communication, D2D, V2X, machine-to-machine/machine-type communication (machine-to-machine/machine-type communication, M2M/MTC), IoT, virtual reality (virtual reality, VR), augmented reality (augmented reality, AR), industrial control (industrial control), self-driving (self-driving), telemedicine (telemedicine), a smart grid (smart grid), smart furniture, smart office, a smart wearable, smart transportation, a smart city (smart city), an uncrewed aerial vehicle, and a robot. For example, the terminal device may be a mobile phone (mobile phone), a tablet computer (tablet computer), a computer with a wireless transceiver function, a VR terminal, an AR terminal, or the like. By way of example and not limitation, in embodiments of this application, the terminal device may alternatively be a wearable device. If the terminal devices described above are located in a vehicle (for example, placed in the vehicle or installed in the vehicle), the terminal devices may be all considered as vehicle-mounted terminal devices. The vehicle-mounted terminal device is also referred to as an on-board unit (on-board unit, OBU). The terminal device in this application may alternatively be a vehicle-mounted module, a vehicle-mounted component, a vehicle-mounted chip, or an on-board unit that is built in the vehicle as one or more components or units. The vehicle may implement a method in this application through the built-in terminal device.

In embodiments of this application, a communication apparatus configured to implement a function of the network device or the terminal device may be the network device or the terminal device, or may be an apparatus, for example, a chip system, that can support the network device or the terminal device in implementing the function. The apparatus may be installed in the network device or the terminal device. In the technical solutions provided in embodiments of this application, an example in which the apparatus configured to implement the function of the network device is a base station, and the apparatus configured to implement the function of the terminal device is UE is used to describe the technical solutions provided in embodiments of this application.

In embodiments of this application, unless otherwise specified, a quantity of nouns indicates "a singular noun or a plural noun", that is, "one or more". "At least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. For example, A/B indicates A or B. "At least one of the following items (pieces)" or a similar expression thereof indicates any combination of these items, including a single item (piece) or any combination of a plurality of items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, a sequence, a time sequence, application scenarios, priorities, importance, or the like of the plurality of objects. For example, a first measurement gap configuration and a second measurement gap configuration may be a same measurement gap configuration, or may be different measurement gaps. In addition, the names do not indicate different lengths, priorities, application scenarios, importance, or the like of the two measurement gaps.

Embodiments of this application mainly relate to technologies related to cell handover and a cell measurement configuration in the DC scenario. To better understand the solutions provided in embodiments of this application, the following describes content related to the cell handover and the cell measurement configuration.

First, the content related to the cell handover is described.
(1) CHO is a condition-based cell handover mechanism. In the CHO, a source base station to which a source cell belongs sends CHO configuration information of at least one candidate cell to UE, where the CHO configuration information includes information about the candidate cell and an execution trigger condition of the CHO. The execution trigger condition of the CHO may be understood as a trigger condition for performing cell handover by the UE, and is also referred to as a trigger condition of the CHO, an execution condition of the CHO, an execution condition, or a trigger condition. Each candidate cell is configured with one or more execution trigger conditions of the CHO. The information about the candidate cell may indicate the candidate cell, and includes, for example, a cell global identifier (cell global identifier, CGI) of the candidate cell, or a physical cell identifier (physical cell identifier, PCI) of the candidate cell and frequency information corresponding to the candidate cell. The UE receives the CHO configuration information, measures the candidate cell indicated by the CHO configuration information, and when signal quality of a candidate cell meets the execution trigger condition, determines the candidate cell as a target cell. The target cell is a cell to which the UE is to be handed over. Then, the UE initiates access to the target cell.
(2) Primary secondary cell addition and change (PSCell addition and change, PAC) includes PSCell addition triggered by an MN and PSCell change triggered by the MN or an SN. The PSCell change is handover that is of a PSCell accessed by the UE and that is caused by mobility of the UE. For example, if the MN (or the SN) determines, based on a measurement result of the UE, that signal quality of one PSCell deteriorates and signal quality of another PSCell improves, the MN (or the SN) notifies the UE to perform PSCell change. The PSCell change may be handover from a cell of one SN to a cell of another SN, or may be handover from a cell of one SN to another cell of the SN.
(3) CPAC is a combination of a CHO technology and a PAC technology, that is, the CHO technology is used in the PSCell addition/change. Similar to the CHO, in the CPAC, a trigger node (the MN or the SN) also sends a CPAC configuration to the UE. The CPAC configuration includes an execution trigger condition of cell handover, information about a candidate PSCell, and configuration information for cell measurement. The UE receives the CPAC configuration. If the UE finds that a candidate cell meets the execution trigger condition, that is, the CPAC is triggered, the UE uses the candidate cell as a target cell to perform a PSCell addition/change procedure.

The following describes the content related to the cell measurement configuration.

The network device sends the measurement configuration to the UE, and the UE measures the candidate cell based on the measurement configuration. When the measurement result meets a specific condition, the UE triggers reporting of a measurement event, that is, reports the measurement result to the network device. After receiving the measurement result reported by the UE, the network device may send a handover command to the UE, to indicate the UE to be handed over from one cell to another cell. If the network device configures the CHO, the UE performs a cell handover procedure when the measurement result meets a specific trigger condition. If the network device configures the CPAC, the UE performs a PSCell handover procedure when the measurement result meets a specific trigger condition.

The measurement configuration may include one or more of the following configurations: a measurement object (measurement object), a measurement gap (measurement gap), a reporting configuration (reporting configuration), a triggering quantity (triggering quantity), a measurement ID (measurement identity), or the like.

The measurement object is an object on which the UE performs measurement, and includes a synchronization signal and physical broadcast channel block (synchronization signal and PBCH block, SSB), an SSB subcarrier spacing, an SSB-based measurement timing configuration (SSB-based measurement timing configuration, SMTC), a whitelisted cell, a blacklisted cell, or the like.

The measurement gap may be understood as duration in which the UE adjusts a receiver from a current frequency to a to-be-measured frequency (for example, a frequency of a neighboring cell) for the measurement. In the measurement gap, the UE does not send or receive data, but adjusts the receiver to the to-be-measured frequency to perform measurement. When the measurement gap ends, the UE adjusts the receiver to a frequency of the serving cell. For example, for measurement of an inter-frequency and/or inter-RAT neighboring cell in a connected mode, the UE stops signal sending and receiving in the serving cell in the measurement gap, adjusts the receiver to a neighboring frequency or an inter-RAT frequency, and receives and measures a signal of the inter-frequency or inter-RAT neighboring cell. The network device may configure the measurement gap for the UE by using RRC signaling.

The reporting configuration is a standard for triggering the UE to report a measurement report and a format of the measurement report. The triggering quantity is a policy for triggering event reporting. The measurement ID is a set including the measurement object and the reporting configuration.

In embodiments of this application, the measurement gap configuration relates to two FRs: an FR1 and an FR2. The FR1 includes FRs supported by the LTE system and the NR system. Compared with the FR1, the FR2 is a high frequency, and may be considered as an FR supported by the NR system. A lowest frequency of the FR1 is greater than or equal to 450 MHz, and a highest frequency of the FR1 is less than or equal to 6 GHz. A lowest frequency of the FR2 is greater than or equal to 24.25 GHz, and a highest frequency of the FR2 is less than or equal to 52.6 GHz. The measurement gap configuration further relates to two types of measurement gaps. One type is configured for the UE, and this type of gap is also referred to as a per-UE gap. The other type is configured for the FR, and this type of gap is also referred to as a per-FR gap. The per-UE gap is applicable to the FR1 and the FR2. The per-FR gap means that two independent gap patterns: an FR1 gap and an FR2 gap are respectively configured for the FR1 and the FR2.

The per-UE gap or the per-FR gap may be configured based on a network preference of the UE and a capability of the UE to support independent FR measurement. If the per-UE gap is configured, the MN determines the gap pattern and a related gap sharing configuration. If the per-FR gap is configured, the measurement gap configuration varies based on a connection scenario. The following describes several listed connection scenarios in detail.

In the EN-DC and the NGEN-DC, the MN determines the FR1 gap pattern and a related gap sharing configuration of the FR1, and the SN determines the FR2 gap pattern and a related gap sharing configuration of the FR2. In the NE-DC and the NR-DC, the MN determines the FR1 and FR2 gap patterns and related gap sharing configurations.

In the EN-DC and the NGEN-DC, the measurement gap configuration from the MN to the UE indicates whether the configuration from the MN is a per-UE gap configuration or an FR1 gap configuration. It may alternatively be understood as that the MN provides the measurement gap type for the UE. In addition, the MN further indicates the configured measurement gap (the per-UE measurement gap or the FR1 measurement gap) and the measurement gap type to the SN. The MN and the SN may exchange assistance information of the measurement gap configuration. For a case of the per-UE gap, the SN may indicate, to the MN, an SN frequency list configured in the FR1 to be measured by the UE and an SN frequency list configured in the FR2 to be measured by the UE. That is, for the MN, the assistance information of the measurement gap configuration includes the SN frequency list that is from the SN and that is configured in the FR1 to be measured by the UE and the SN frequency list that is from the SN and that is configured in the FR2 to be measured by the UE. For a case of the per-FR gap, the SN may indicate, to the MN, an SN frequency list configured in the FR1 to be measured by the UE, and the MN indicates, to the SN, an MN frequency list configured in the FR2 to be measured by the UE. That is, for the MN, the assistance information of the measurement gap configuration includes the SN frequency list that is from the SN and that is configured in the FR1 to be measured by the UE. That is, for the SN, the assistance information of the measurement gap configuration includes the MN frequency list that is from the MN and that is configured in the FR2 to be measured by the UE.

It may be understood that, in the NE-DC, the MN also indicates the configured per-UE measurement gap or FR1 measurement gap to the SN. The SN may feed back a gap acknowledgment to the MN. If the SN is configured with the per-FR measurement gap, the gap acknowledgment does not include any frequency list. In the NR-DC, the MN may indicate the configured per-UE measurement gap, FR1 measurement gap, or FR2 measurement gap, and the measurement gap type to the SN. The SN may indicate, to the MN, an SN frequency list configured in the FR1 to be measured by the UE and an SN frequency list configured in the FR2 to be measured by the UE.

In different scenarios, the measurement object includes different content. For example, the network device configures the CHO, and the CHO is handover of a PCell of the MN. A measurement configuration used when the UE performs CHO evaluation (that is, evaluates whether the trigger condition of the CHO is met) is sent by the source MN (that is, a base station that provides a current serving cell). In this case, the measurement object includes a to-be-measured frequency of the source MN and a to-be-measured frequency of a candidate MN determined by the source MN. In another possible scenario, the network device configures the CHO and the CPAC. The CPAC is addition or change of a PSCell of the SN. The source MN configures the CHO for the UE, and may provide, for a plurality of candidate PCells, a PSCell-related configuration corresponding to each candidate PCell. If one candidate PCell triggers CHO handover, the UE attempts to access the candidate PCell, and if a PSCell of the PCell meets a trigger condition of the CPAC, the UE further attempts to perform PSCell change. For example, an example in which there are two candidate primary cells (for example, a PCell 1 and a PCell 2) is used. PSCells corresponding to the PCell 1 include a PSCell 1, a PSCell 2, and a PSCell 3. PSCells corresponding to the PCell 2 include a PSCell 4 and a PSCell 5. The network device configures both the CHO and the CPAC. Correspondingly, specific relationships between candidate cells of the CHO and the CPAC configured by the network device may be: a CHO PCell 1+{a CPAC PSCell 1, a CPAC PSCell 2, and a CPAC PSCell 3}; and a CHO PCell 2+{a CPAC PSCell 4 and a CPAC PSCell 5}. If the PCell 1 meets the execution trigger condition of the CHO, the UE attempts to access the PCell 1. If the PSCell 3 of the PCell 1 meets the execution trigger condition of the CPAC, the UE further attempts to perform PSCell change. It may be understood that, that the trigger condition of the cell handover is met may be that the PCell 1 meets the execution trigger condition of the CHO, or may be that the PSCell corresponding to the PCell 1 meets the execution trigger condition of the CPAC. For example, both the PCell 1 and the PSCell 3 meet the execution trigger condition. There is no case in which the PSCell meets the execution trigger condition of the CPAC but the PCell does not meet the execution trigger condition of the CHO.

If the MN configures the CHO and the CPAC, the UE needs to continuously determine whether a candidate MN meets the execution trigger condition of the CHO, and whether a candidate SN determined by the candidate MN meets the execution trigger condition of the CPAC. However, the MN considers only a CHO measurement configuration requirement, and does not consider a CPAC measurement configuration requirement, that is, a to-be-measured frequency of the candidate SN is not considered for the measurement object included in the measurement configuration sent by the MN to the UE. In this way, the UE may measure only a part of frequencies of the candidate SN. For example, the UE measures a to-be-measured frequency that is in the to-be-measured frequency of the SN and that overlaps that of the MN. The UE may even fail to measure the to-be-measured frequency of the candidate SN, for example, if the to-be-measured frequency of the SN does not overlap the to-be-measured frequency of the MN. Consequently, a CPAC trigger opportunity is reduced, that is, an opportunity for the UE to access the PSCell is reduced. In addition, because the MN does not consider the to-be-measured frequency of the candidate SN, the measurement gap configured by the MN may be improper, and measurement performance of the UE is affected.

In embodiments of this application, when the MN configures the CHO and the CPAC, the candidate MN may provide the measured frequency of the candidate SN for the source MN, so that the source MN may configure a proper measurement object for the UE based on the measured frequency of the candidate SN. For example, the measurement object configured by the source MN includes the measured frequency of the candidate SN. In this way, when evaluating whether the execution trigger condition of the CHO is met, in addition to measuring the to-be-measured frequency of the candidate MN, the UE further measures the to-be-measured frequency of the candidate SN, that is, when evaluating whether the execution trigger condition of the CHO is met, the UE further evaluates the execution trigger condition of the CPAC. This can increase the CPAC trigger opportunity, to help the UE complete the CPAC more quickly. In addition, this helps the UE access a more proper cell, so that communication quality after the UE accesses the cell can be improved. In addition, the source MN may alternatively configure the measurement gap with reference to the to-be-measured frequency of the candidate SN, to reduce impact on the measurement performance of the UE as much as possible.

The technical solutions provided in embodiments of this application are described below with reference to the accompanying drawings.

An embodiment of this application provides a measurement configuration method. The method may be applied to a DC or MC scenario, for example, applied to the DC scenario in FIG. 1. In addition, the method is applicable to a case in which a network device configures CHO and CPAC. It may be understood that, if UE performs PCell handover, the UE may be handed over to another PCell provided by an S-MN, or may be handed over to a PCell provided by a C-MN. Similarly, if the UE performs PSCell handover, the UE may be handed over to another PSCell provided by an S-SN, or may be handed over to a PSCell provided by a C-SN.

FIG. 2 is a schematic flowchart of a measurement configuration method according to an embodiment of this application. In the following descriptions, a source master node is denoted as an S-MN, a source secondary node is denoted as an S-SN, a candidate master node is denoted as a C-MN, a candidate secondary node is denoted as a C-SN, and UE is used as an example of a terminal device.

S201: The S-MN sends a CHO request to one or more C-MNs, and correspondingly, the one or more C-MNs receive the CHO request sent by the S-MN.

The S-MN may send the CHO request to each C-MN.

S202: A first C-MN sends a CPA request or a CPC request to one or more C-SNs, and correspondingly, the one or more C-SNs receive the CPA request or the CPC request sent by the first C-MN.

It should be understood that, if the first C-MN determines that the S-SN exists, the first C-MN sends the CPC request to the one or more C-SNs. If the first C-MN determines that no S-SN exists, the first C-MN sends the CPA request to the one or more C-SNs. Alternatively, the first C-MN sends the CPA request to the one or more C-SNs by default, that is, the first C-MN sends the CPA request to the one or more C-SNs regardless of whether the S-SN exists.

The first C-MN is a C-MN that receives the CHO request. It should be understood that the first C-MN belongs to the one or more C-MNs. If one C-MN receives the CHO request, the first C-MN is the C-MN. If a plurality of C-MNs receive the CHO request, the first C-MN is one or more of the plurality of C-MNs. After receiving the CHO request, the first C-MN may send the CPA request to a C-SN determined by the first C-MN. One C-MN may determine one or more C-SNs.

S203: A first C-SN sends a CPA request response to the first C-MN, and correspondingly, the first C-MN receives the CPA request response sent by the first C-SN.

In another example, S203 may be replaced with the following: A first C-SN sends a CPC request response to the first C-MN, and correspondingly, the first C-MN receives the CPC request response sent by the first C-SN.

It should be understood that the first C-MN sends the CPA request/CPC request to the one or more C-SNs, and the first C-MN receives the CPA request response/CPC request response sent by the first C-SN. The first C-SN is a C-SN that receives the CPA request/CPC request.

An example in which the first C-MN sends the CPA request to the one or more C-SNs is used. If one C-SN receives the CPA request, the first C-SN is the C-SN. If a plurality of C-SNs receive the CPA request, the first C-SN is one or more of the plurality of C-SNs. After receiving the CPA request, the first C-SN may send the CPA request response to the first C-MN. The CPA request response includes frequency information of the first C-SN, for example, a to-be-measured frequency of the first C-SN. It should be understood that the plurality of C-SNs that receive the CPA request may separately send a CPA request response to the first C-MN, and a CPA request response sent by any C-SN includes a to-be-measured frequency of the C-SN. Similarly, the first C-MN sends the CPC request to the one or more C-SNs. If one C-SN receives the CPC request, the first C-SN is the C-SN. If a plurality of C-SNs receive the CPC request, the first C-SN is one or more of the plurality of C-SNs. After receiving the CPC request, the first C-SN may send the CPC request response to the first C-MN. The CPC request response includes frequency information of the first C-SN, for example, a to-be-measured frequency of the first C-SN. It should be understood that the plurality of C-SNs that receive the CPC request may separately send a CPC request response to the first C-MN, and a CPC request response sent by any C-SN includes a to-be-measured frequency of the C-SN.

S204: The first C-MN sends a CHO request response to the S-MN, and correspondingly, the S-MN receives the CHO request response sent by the first C-MN.

After receiving the CPA request response sent by the first C-SN, the first C-MN may generate an RRC configuration message of the first C-MN. The RRC configuration message of the first C-MN may include RRC configuration information related to the first C-MN (also referred to as an MN-RRC configuration message) and a CPAC configuration (for example, referred to as a first CPAC configuration) for a PSCell managed by the first C-SN. The first CPAC configuration includes an SN-RRC configuration message corresponding to the first C-SN, for example, a radio air interface configuration corresponding to the first C-SN and an execution trigger condition corresponding to the first C-SN. Therefore, it may be considered that the RRC configuration message of the candidate MN includes the following content: the MN-RRC configuration message corresponding to the first C-MN, the SN-RRC configuration message corresponding to the first C-SN, and the execution trigger condition corresponding to the first C-SN.

After generating the RRC configuration message of the first C-MN, the first C-MN may send the CHO request response to the S-MN. The CHO request response may include the RRC configuration message of the first C-MN, the CPAC configuration, and the to-be-measured frequency of the first C-SN. It may alternatively be understood as that the CHO request response includes the following content: the MN-RRC configuration message corresponding to the first C-MN, the SN-RRC configuration message corresponding to the first C-SN, the execution trigger condition corresponding to the first C-SN, and the to-be-measured frequency of the first C-SN.

S205: The S-MN sends a first RRC configuration message to the UE, and correspondingly, the UE receives the first RRC configuration message sent by the S-MN.

After receiving the CHO request response, the S-MN may determine a measurement configuration, for example, a measurement object and a measurement gap. For example, the measurement object may include a to-be-measured frequency of the S-MN, a to-be-measured frequency of the first C-MN, a to-be-measured frequency of the S-SN, and the to-be-measured frequency of the first C-SN. The UE measures a part or all of to-be-measured frequencies in the measurement object based on the measurement configuration, to determine a target cell. Because the measurement object includes the to-be-measured frequency of the first C-SN, when evaluating whether a trigger condition of CHO is met, in addition to measuring the to-be-measured frequency of the C-MN, the UE further measures the to-be-measured frequency of the first C-SN, that is, when evaluating whether the execution trigger condition of the CHO is met, the UE also evaluates whether an execution trigger condition of CPAC is met. How to configure the measurement gap for the UE is specifically described below. Details are not described herein.

After receiving the CHO request response, the S-MN may further determine a CHO configuration and the CPAC configuration. To distinguish from the CPAC configuration in the CHO request response received by the S-MN, a CPAC configuration configured by the S-MN is referred to as a second CPAC configuration. It may be understood that the CHO configuration determined by the S-MN includes radio air interface configurations corresponding to all C-MNs including the first C-MN and execution trigger conditions corresponding to all the C-MNs. The second CPAC configuration may include radio air interface configurations corresponding to all C-SNs including the first C-SN and execution trigger conditions corresponding to all the C-SNs. The execution trigger condition corresponding to the MN may alternatively be understood as an execution trigger condition corresponding to a PCell (also referred to as a candidate PCell) managed by the MN. The execution trigger condition corresponding to the SN may alternatively be understood as an execution trigger condition corresponding to a PSCell (also referred to as a candidate PSCell) managed by the SN. The candidate PSCell includes all PSCells managed by all C-SNs determined by the first C-MN.

The execution trigger condition corresponding to the candidate MN (for example, the first C-MN), that is, a first execution trigger condition, is the execution trigger condition of the CHO, and is a trigger condition that needs to be met when the UE is handed over to one PCell. In other words, the UE triggers a procedure of handover to one PCell only when a first execution trigger condition corresponding to the PCell is met. The execution trigger condition corresponding to the candidate SN (for example, the first C-SN), that is, a second execution trigger condition, is the execution trigger condition of the CPAC, and is a trigger condition that needs to be met when the UE is handed over to one PSCell. In other words, the UE triggers a procedure of handover to one PSCell only when a second execution trigger condition corresponding to the PSCell is met. It may be understood that one candidate PCell corresponds to one first execution trigger condition, and first execution trigger conditions corresponding to different candidate PCells may be the same or may be different. One candidate PSCell corresponds to one second execution trigger condition, and second execution trigger conditions corresponding to different candidate PSCells may be the same or may be different.

After determining the measurement object, the measurement gap (for example, referred to as a first measurement gap) corresponding to the measurement object, the CHO configuration, and the second CPAC configuration, the S-MN may provide the information for the UE. For example, the S-MN sends the first RRC configuration message to the UE, where the first RRC configuration message includes the CHO configuration, the second CPAC configuration, the measurement object, and a first measurement gap configuration corresponding to the measurement object. It may alternatively be understood as that the first RRC configuration message includes the following content: the radio air interface configurations corresponding to all the C-MNs including the first C-MN, first execution trigger conditions corresponding to all the C-MNs, the radio air interface configurations corresponding to all the C-SNs including the first C-SN, and second execution trigger conditions corresponding to all the C-SNs (that is, second execution trigger conditions corresponding to candidate PSCells).

The first RRC configuration message has a plurality of implementation forms. The following describes the implementation forms of the first RRC configuration message with reference to an implementation form of the CHO request response. In the following descriptions, for ease of description, a second RRC configuration message, that is, the foregoing MN-RRC configuration message corresponding to the first C-MN (also referred to as a C-MN RRC configuration message in this application), is introduced. In an example, the second RRC configuration message may include an information element: Candidate Cell RRC configuration that carries both a C-MN configuration and a C-SN configuration including the execution trigger condition of the CPAC. The C-SN configuration including the execution trigger condition of the CPAC may also be referred to as a CPAC C-SN configuration. In another example, the Candidate Cell RRC configuration does not include the CPAC C-SN configuration. For example, the Candidate Cell RRC configuration may include only the C-MN configuration, or may include the C-MN configuration and a configuration of a blindly configured SN, where the blindly configured SN is one SN that does not need the execution trigger condition. It may be understood that the Candidate Cell RRC configuration is merely an example of a name of the information element, and another name may be used to represent the information element. This is not limited in this application.

The first RRC configuration message may be understood as an RRC configuration message related to the S-MN (also referred to as an S-MN RRC configuration message in this application).

Implementation form 1: The first RRC configuration message includes the second RRC configuration message and the first execution trigger condition corresponding to the first C-MN. The second RRC configuration message includes the radio air interface configuration of the first C-MN and the second execution trigger condition corresponding to the candidate PSCell, and an information element other than the second RRC configuration message in the first RRC configuration message further includes identification information of the candidate PSCell and the second execution trigger condition corresponding to the candidate PSCell. The identification information of the candidate PSCell may be an ID of the candidate PSCell, or the identification information of the candidate PSCell may be a list of the candidate PSCell, and the list includes an ID of each candidate PSCell. It may alternatively be understood as that there are two second execution trigger conditions corresponding to the candidate PSCell, where one is in the information element other than the second RRC configuration message in the first RRC configuration message, and the other is in the second RRC configuration message. In this case, when evaluating the execution trigger condition of the CHO and the execution trigger condition of the CPAC, the UE only needs to obtain the second execution trigger condition from the first RRC configuration message, and does not need to parse the second RRC configuration message. If the CHO is triggered, but the CPAC is not triggered, after successfully performing primary cell handover, the UE may delete a configuration for the first execution trigger condition in the first RRC configuration message, that is, retain only the second RRC configuration message, so that the CPAC evaluation can be subsequently performed based on an existing CPAC configuration.

For example, the implementation form of the first RRC configuration message is as follows:

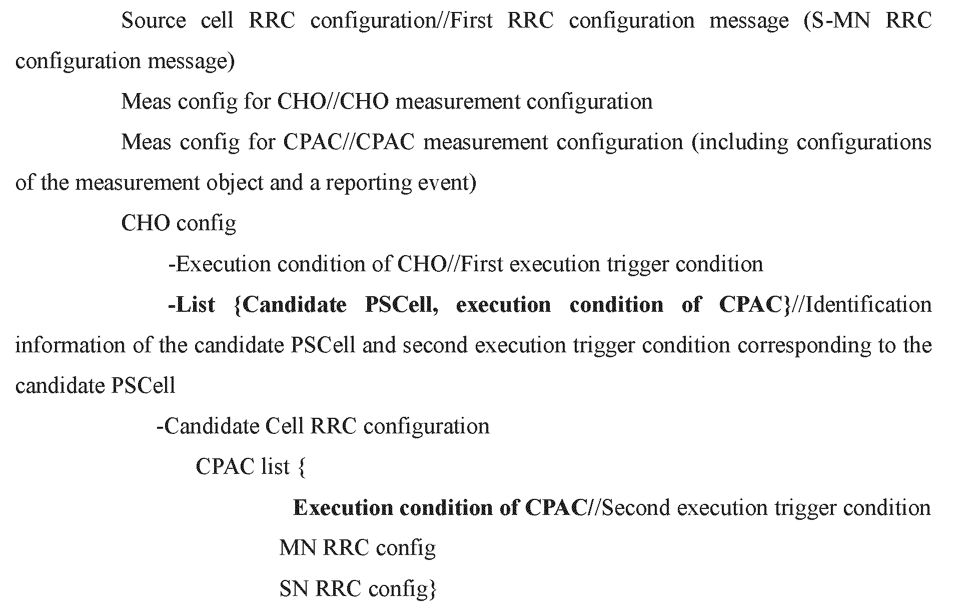

The Candidate Cell RRC configuration carries the CPAC C-SN configuration. It can be learned that the **execution condition of CPAC** is not only included in the second RRC configuration message, but also included in the information element other than the second RRC configuration message in the first RRC configuration message. The second RRC configuration message, that is, the Candidate Cell RRC configuration, may be encapsulated in a container (container). The UE obtains the **execution condition of CPAC** from the Source cell RRC configuration, and may obtain and evaluate the execution trigger condition of the CPAC without parsing the Candidate Cell RRC configuration. If the CHO is triggered, but the CPAC is not triggered, the UE may delete a configuration for the first execution trigger condition in the Source cell RRC configuration, that is, retain only the Candidate Cell RRC configuration, so that the CPAC evaluation can be subsequently performed based on a stored historical CPAC configuration.

The information element: Candidate Cell RRC configuration in the second RRC configuration message may carry the C-MN configuration and the CPAC C-SN configuration, or may carry the C-MN configuration but does not carry the CPAC C-SN configuration. Therefore, whether the Candidate Cell RRC configuration carries the CPAC C-SN configuration may be indicated by indication information. For example, the Candidate Cell RRC configuration includes an indication indicating whether the CPAC C-SN configuration is carried. If both the CHO and the CPAC are triggered, the UE may use a Candidate Cell RRC configuration that carries the CPAC C-SN configuration. If the CHO is triggered, but the CPAC is not triggered, the UE may use a Candidate Cell RRC configuration that does not carry the CPAC C-SN configuration. If the Candidate Cell RRC configuration includes only the C-MN configuration, the UE may configure only the MN and does not configure the SN. If the Candidate Cell RRC configuration includes the C-MN configuration and the configuration of the blindly configured SN, the UE may configure the MN and blindly configure the SN.

For example, the implementation form of the first RRC configuration message may be as follows:

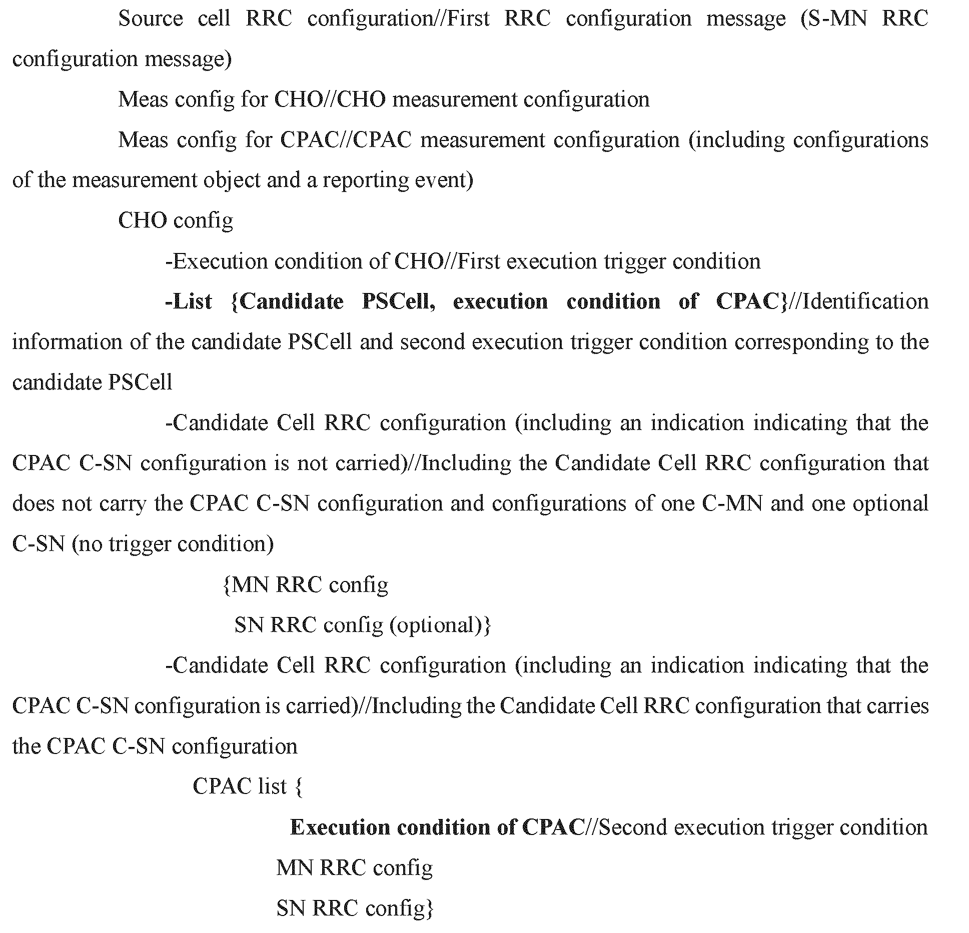

Implementation form 2: The first RRC configuration message includes the second RRC configuration message and the first execution trigger condition corresponding to the first C-MN, where the second RRC configuration message includes the radio air interface configuration of the first C-MN and the second execution trigger condition corresponding to the candidate PSCell, and an information element other than the second RRC configuration message in the first RRC configuration message does not include identification information of the candidate PSCell or the second execution trigger condition corresponding to the candidate PSCell.

A difference from the implementation form 1 lies in that the information element other than the second RRC configuration message in the first RRC configuration message does not include the identification information of the candidate PSCell or the second execution trigger condition corresponding to the candidate PSCell. In other words, the second execution trigger condition corresponding to the candidate PSCell is included only in the second RRC configuration message. In this case, when evaluating the execution trigger condition of the CHO and the execution trigger condition of the CPAC, the terminal device can obtain the execution trigger condition of the CPAC only by parsing the second RRC configuration message. Usually, the second RRC configuration message is parsed only after the UE evaluates that the CHO execution trigger is met. If the CHO is not triggered, the second RRC configuration message does not need to be parsed. Similar to the implementation form 1, if the CHO is triggered, but the CPAC is not triggered, after successfully performing primary cell handover, the UE may retain only the second RRC configuration message, that is, delete a configuration for the first execution trigger condition in the first RRC configuration message, so that the CPAC evaluation can be subsequently performed based on an existing CPAC configuration.

For example, the implementation form of the first RRC configuration message is as follows:

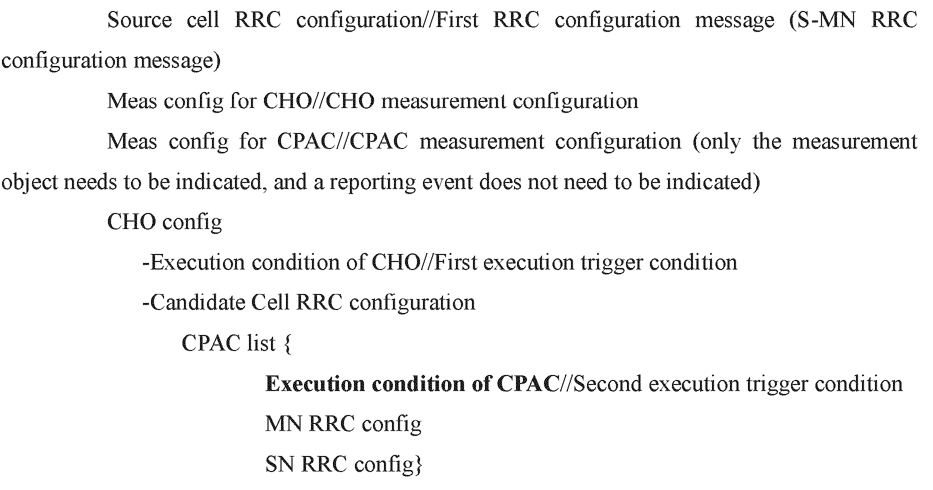

The Candidate Cell RRC configuration carries the CPAC C-SN configuration. It can be learned that the **Execution condition of CPAC** is included only in the second RRC configuration message, and the information element other than the second RRC configuration message in the first RRC configuration message does not include the **Execution condition of CPAC.** In this case, the UE parses the Candidate Cell RRC configuration to obtain and evaluate the execution trigger condition of the CPAC. Similar to the implementation form 1, if the CHO is triggered, but the CPAC is not triggered, after successfully performing primary cell handover, the UE may retain only the Candidate Cell RRC configuration, that is, delete a configuration for the first execution trigger condition in the Source cell RRC configuration, so that the CPAC evaluation can be subsequently performed based on a stored historical CPAC configuration.

Similar to the implementation form 1, the second RRC configuration message may include a Candidate Cell RRC configuration that carries the CPAC C-SN configuration, and may further include a Candidate Cell RRC configuration that does not carry the CPAC C-SN configuration. For example, the implementation form of the first RRC configuration message is as follows:

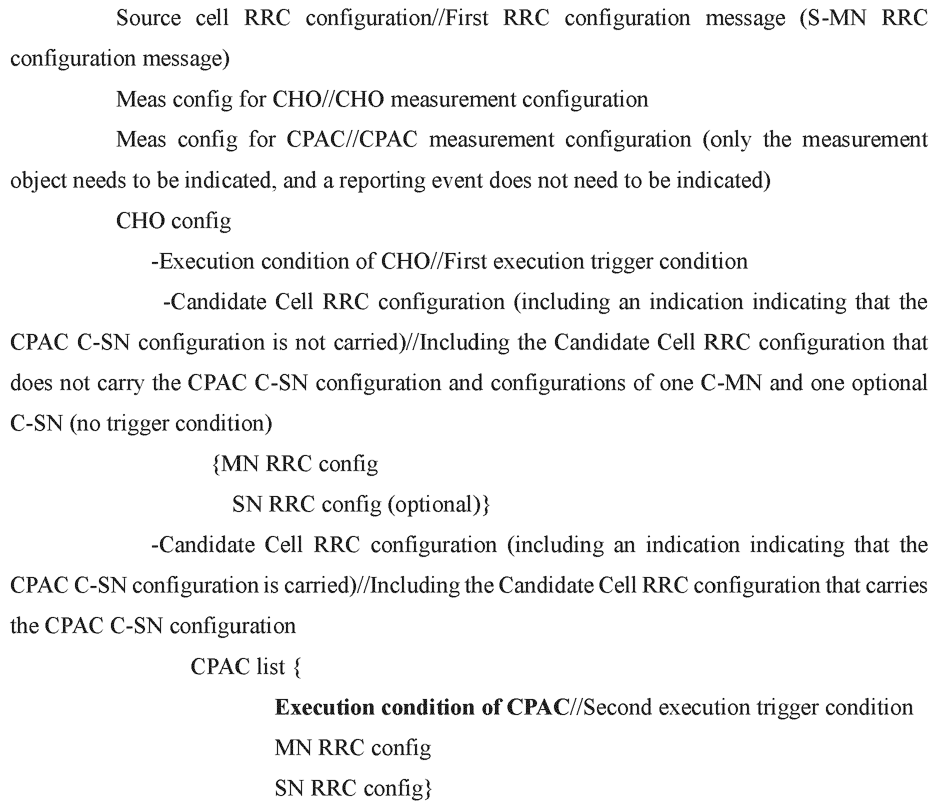

Implementation form 3: The first RRC configuration message includes the second RRC configuration message and the first execution trigger condition corresponding to the first C-MN, where the second RRC configuration message includes the radio air interface configuration of the first C-MN and the radio air interface configuration of the C-SN, the second RRC configuration message does not include the second execution trigger condition corresponding to the candidate PSCell, and an information element other than the second RRC configuration message in the first RRC configuration message further includes identification information of the candidate PSCell and the second execution trigger condition corresponding to the candidate PSCell. A difference from the implementation form 1 lies in that the second RRC configuration message does not include the second execution trigger condition corresponding to the candidate PSCell, but the second RRC configuration message includes the radio air interface configuration of the C-SN. In this case, when evaluating the execution trigger condition of the CPAC, the terminal device may reuse the second execution trigger condition configured outside the second RRC configuration message. In other words, the terminal device does not need to parse the second RRC configuration message. In addition, if the CHO is triggered, but the CPAC is not triggered, after successfully performing primary cell handover, the UE may retain only the second RRC configuration message, but the terminal device subsequently needs to wait for a new CPAC configuration sent by a network device, to perform CPAC evaluation.

For example, the implementation form of the first RRC configuration message is as follows:

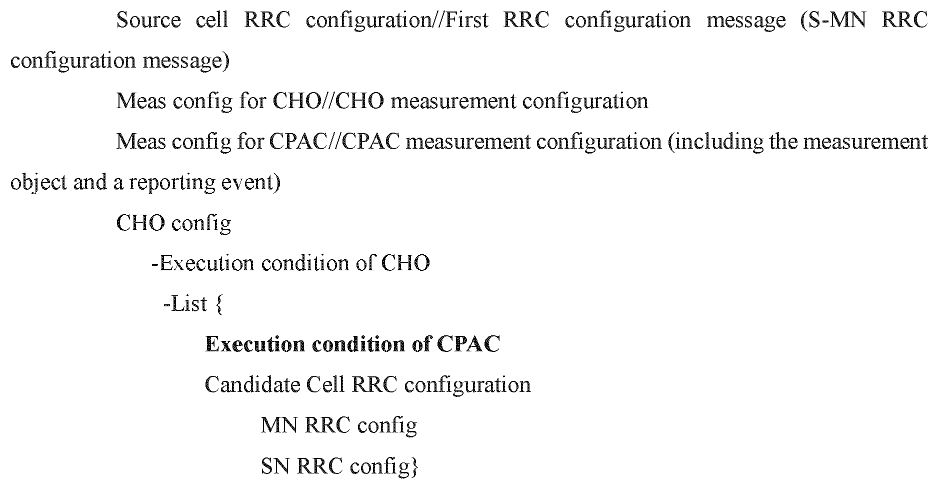

The Candidate Cell RRC configuration carries the CPAC C-SN configuration. It can be learned that the **Execution condition of CPAC** is included only in the information element other than the second RRC configuration message in the first RRC configuration message, that is, the second RRC configuration message does not include the **Execution condition of CPAC.** In this case, when evaluating the execution trigger condition of the CPAC, the UE may reuse the second execution trigger condition configured outside the Candidate Cell RRC configuration. In other words, the UE does not need to parse the Candidate Cell RRC configuration. In addition, if the CHO is triggered, but the CPAC is not triggered, the UE may retain only the Candidate Cell RRC configuration, but the terminal device subsequently needs to wait for the new CPAC configuration sent by the network device, to perform CPAC evaluation.

Similar to the implementation form 1, the second RRC configuration message may include a Candidate Cell RRC configuration that carries the CPAC C-SN configuration, and may further include a Candidate Cell RRC configuration that does not carry the CPAC C-SN configuration. For example, the implementation form of the first RRC configuration message is as follows:

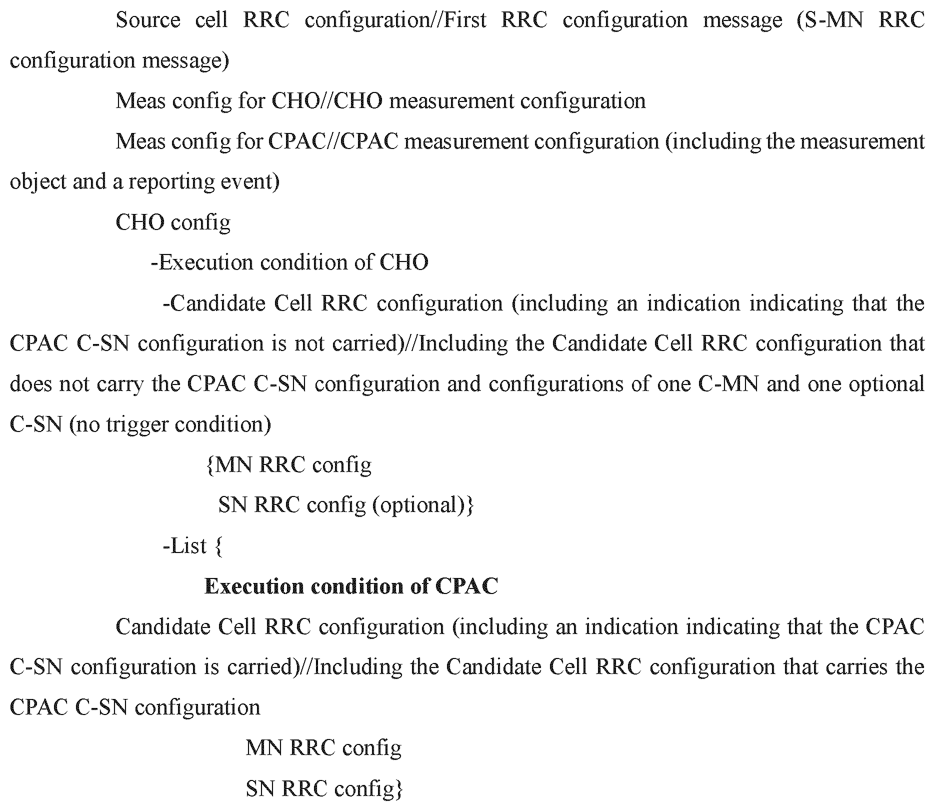

It should be noted that the foregoing three implementation forms of the first RRC configuration message are examples, and an implementation to be used is not limited in this embodiment of this application.

If the UE determines, based on the first RRC configuration message, that the execution trigger condition of the CHO and/or the execution trigger condition of the CPAC are/is met, the UE sends an RRC reconfiguration complete (RRC Reconfiguration Complete) message to the source node. If the S-MN receives the RRC Reconfiguration Complete message sent by the UE, the S-MN performs early data forwarding (early data forwarding). If the S-MN receives a CPAC RRC Reconfiguration Complete message sent by the UE, the S-MN notifies the S-SN to perform early data forwarding.

In a CHO procedure, the S-MN sends data to the UE, and the S-MN continuously forwards user data to a target node. After the S-MN knows that the UE successfully completes the CHO, the S-MN stops transmission of the data of the UE and stops early data forwarding to the target node. The target node continuously receives and stores the data from the S-MN, and clears, based on an early status transfer (early status transfer) message sent by the S-MN, user data that has been sent by the S-MN in the stored data. The S-MN is allowed to send one or more early status transfer messages to the target node. After the S-MN knows that the UE successfully completes the CHO, the S-MN performs late data forwarding (late data forwarding). The S-MN notifies, by performing late data forwarding, an MN after successful handover/an SN after successful change of a latest number of received data, that is, a number to which the data is numbered, so that the MN after the successful handover/the SN after the successful change numbers newly received unnumbered data from the latest number.

Similar to the CHO procedure, in a CPAC procedure, if the S-SN exists, the S-SN sends data to the UE, and the S-SN continuously forwards the user data to the target node. If the S-SN does not exist, the S-MN continuously forwards the user data to the target node. For details, refer to a procedure in which the S-MN sends the data to the UE and forwards the user data to the target node in the foregoing CHO procedure. Details are not described herein again.

To better understand the measurement configuration method provided in embodiments of this application, the following uses specific examples to describe possible procedures of the measurement configuration method provided in embodiments of this application. It should be understood that, to enable UE to have sufficient time to measure a to-be-measured frequency that needs to be measured, a proper measurement gap needs to be configured for the UE. The measurement gap is configured based on a measurement object, and measurement gaps configured for different measurement objects are different. In addition, in different scenarios, nodes for configuring the measurement gap may be different. For example, in EN-DC and NGEN-DC, an MN determines an FR1 gap pattern and a related gap sharing configuration of an FR1, and an SN determines an FR2 gap pattern and a related gap sharing configuration of an FR2. In NE-DC and NR-DC, the MN determines the FR1 and FR2 gap patterns and related gap sharing configurations. In the following examples, how to configure the measurement gap for the UE is further described.

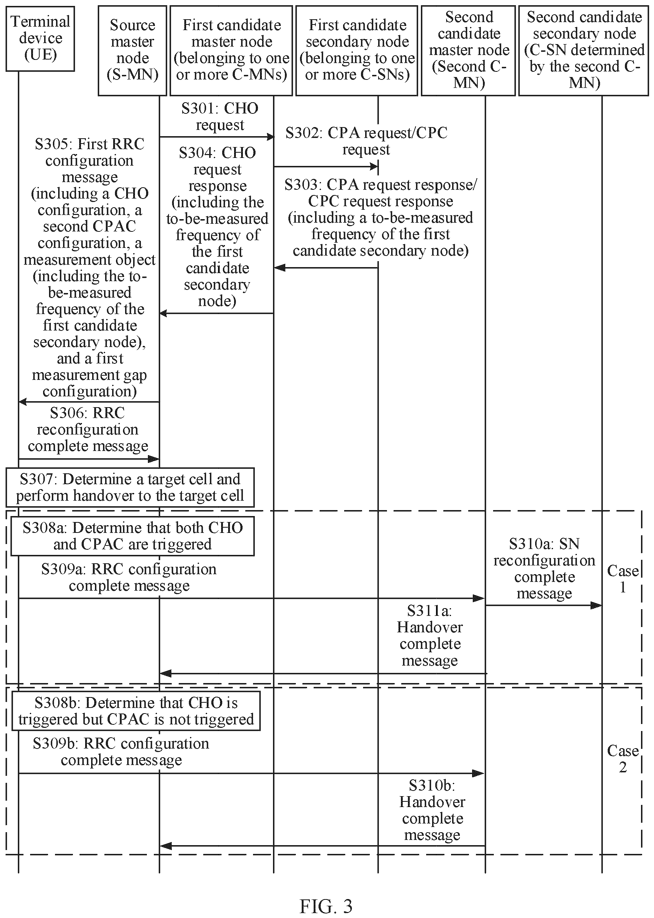

FIG. 3 is a flowchart of a measurement configuration method in a first example according to an embodiment of this application. In the example, an example in which an S-MN determines a measurement gap based on a to-be-measured frequency of a first C-SN reported by a first C-MN, a to-be-measured frequency of the S-MN, a to-be-measured frequency of the first C-MN, and a to-be-measured frequency of an S-SN is used.

S301: The S-MN sends a CHO request to one or more C-MNs, and correspondingly, the one or more C-MNs receive the CHO request sent by the S-MN. For details, refer to related content of S201.

S302: The first C-MN sends a CPA request to one or more C-SNs, and correspondingly, the one or more C-SNs receive the CPA request sent by the first C-MN. For details, refer to related content of S202.

S303: The first C-SN sends a CPA request response to the first C-MN, and correspondingly, the first C-MN receives the CPA request response sent by the first C-SN. For details, refer to related content of S203.

In another example, the first C-MN may send a CPC request to the one or more C-SNs, and the first C-SN may send a CPC request response to the first C-MN. Details are not described again.

S304: The first C-MN sends a CHO request response to the S-MN, and correspondingly, the S-MN receives the CHO request response sent by the first C-MN.

The CHO request response includes the to-be-measured frequency of the first C-SN. The first C-MN receives the CPA request response sent by the first C-SN, obtains the to-be-measured frequency of the first C-SN, and sends the to-be-measured frequency of the first C-SN to the S-MN by using the CHO request response. For details, refer to related descriptions of S204. Details are not described herein again. Optionally, the CHO request response includes an identifier and/or a data forwarding address of the candidate secondary node, to implement direct data forwarding of CPAC.

S305: The S-MN sends a first RRC configuration message to UE, and correspondingly, the UE receives the first RRC configuration message sent by the S-MN.

The S-MN receives the CHO request response, and may generate the first RRC configuration message, where the first RRC configuration message includes a configuration of a measurement object and a first measurement gap configuration. The first measurement gap configuration is a configuration of a first measurement gap. For other content included in the first RRC configuration message, refer to related content of S205. Details are not described herein again. The first measurement gap configuration may be configured based on the to-be-measured frequency of the S-MN, the to-be-measured frequency of the first C-MN, the to-be-measured frequency of the S-SN, and the to-be-measured frequency of the C-SN. It should be understood that a larger quantity of frequencies indicates longer needed measurement time. In this embodiment of this application, the first measurement gap configuration may be configured based on the to-be-measured frequency of the S-MN, the to-be-measured frequency of the first C-MN, the to-be-measured frequency of the S-SN, and the to-be-measured frequency of the C-SN, that is, time sufficient for measurement is configured, to avoid missing measurement of a part of the to-be-measured frequencies.

It should be noted that the S-MN may further send the first measurement gap configuration and a measurement gap type to the S-SN. Therefore, the S-SN may determine, based on the first measurement gap configuration and the measurement gap type, whether to configure a gap for the UE and a type of the gap to be configured. For example, in an EN-DC scenario or an NGEN-DC scenario, the first measurement gap configuration is a gap configuration in an FR1, and the measurement gap type is a measurement gap type for the FR1. When a to-be-measured frequency of at least one SN is in an FR2, the S-SN may further configure gap measurement in the FR2 for the UE.

S306: The UE sends an RRC reconfiguration complete message to the S-MN, and correspondingly, the S-MN receives the RRC reconfiguration complete message sent by the UE.

After receiving the first RRC configuration message, the UE may complete reconfiguration based on the first RRC configuration message. After completing the reconfiguration, the UE sends the RRC reconfiguration complete message to the S-MN.

After receiving the RRC reconfiguration complete message fed back by the UE, the S-MN starts to perform data forwarding between the S-MN and the C-MN. The S-MN further notifies the S-SN to prepare for data forwarding of the CPAC, that is, data forwarding between the S-SN and the C-SN.

The data forwarding of the CPAC includes two manners. One is referred to as a direct data forwarding manner and the other is referred to as an indirect data forwarding manner. In the direct data forwarding manner, when notifying the S-SN to prepare to perform data forwarding, the S-MN further provides the S-SN with identifiers of the one or more C-SNs and/or data forwarding addresses corresponding to the C-SNs. Therefore, the S-SN performs early data forwarding based on a data forwarding address of each C-SN. In this case, the CHO request response sent by the C-MN to the S-MN includes the identifiers and/or the data forwarding addresses of the one or more C-SNs.

In the indirect data forwarding manner, when notifying the S-SN to prepare to perform data forwarding, the S-MN does not provide a data forwarding address or a data forwarding address of the S-MN to the S-SN. The S-SN forwards data to the S-MN, the S-MN forwards the data to the C-MN, and then the C-MN forwards the data to the C-SN. It can be learned that, if the indirect data forwarding manner is used, the CHO request response may not include the identifier and/or the data forwarding address of the C-SN.

S307: The UE determines a target cell and performs handover to the target cell.

The UE may measure the measurement object in the first RRC configuration message, to determine, based on a measurement result, a target cell that meets an execution trigger condition. That is, the UE evaluates an execution trigger condition of CHO (a first execution trigger condition) and an execution trigger condition of the CPAC (a second execution trigger condition). There may be several cases based on different execution trigger conditions that are met. For example, if both the first execution trigger condition and the second execution trigger condition are met, or the first execution trigger condition is met but the second execution trigger condition is not met, a subsequent procedure may be different. The following separately provides descriptions. In the following descriptions, an example in which there are two PCells (for example, a PCell 1 and a PCell 2) is used. PSCells corresponding to the PCell 1 include a PSCell 1, a PSCell 2, and a PSCell 3. PSCells corresponding to the PCell 2 include a PSCell 4 and a PSCell 5.

Case 1: The first execution trigger condition and the second execution trigger condition are met.

S308a: The UE determines that both the CHO and the CPAC are triggered. For example, the PCell 2 meets the first execution trigger condition, and the PSCell 4 meets the second execution trigger condition. In this case, the UE may attempt to access the PCell 2, and may further attempt to perform PSCell change, that is, change to the PSCell 4. The PCell 2 may be understood as a target PCell, and the PSCell 4 may be understood as a target PSCell.

S309a: The UE sends an RRC configuration complete message to a second C-MN, and correspondingly, the second C-MN receives the RRC configuration complete message sent by the UE.

The second C-MN is a C-MN that manages the PCell 2. It should be understood that if a plurality of C-MNs send CHO request responses to the S-MN, the second C-MN is one of the C-MNs that send the CHO request responses. Optionally, the second C-MN is the foregoing first C-MN. The RRC configuration complete message may be used by the UE to establish a connection to the second C-MN. In addition, the RRC configuration complete message includes identification information of the target PSCell. The foregoing example is still used. The RRC configuration complete message may include an identifier (identifier, ID) of the PSCell 4.

S310a: The second C-MN sends an SN reconfiguration complete message to a second C-SN, and correspondingly, the second C-SN receives the SN reconfiguration complete message sent by the second C-MN.

The second C-MN may determine, based on the ID of the PSCell 4, to send the SN reconfiguration complete message to the second C-SN, where the SN reconfiguration complete message may be used by the UE to perform PSCell change. The second C-SN is a C-SN that manages the PSCell 4. It should be understood that the second C-SN belongs to at least one C-SN determined by the second C-MN. If the second C-MN determines one C-SN, the second C-SN is the C-SN. If the second C-MN determines a plurality of C-SNs, the second C-SN is one of the plurality of C-SNs.

S311a: The second C-MN sends a handover complete message to the S-MN.

The second C-MN determines that the UE completes cell handover, and may send the handover complete message to the S-MN.

It may be understood that, if the S-MN determines that late data forwarding is used in this handover, after receiving the handover complete message, the S-MN forwards user data and SN status information corresponding to the user data to the second C-MN. The second C-MN may use the late data forwarding to forward the user data and the SN status information corresponding to the user data to the second C-SN.

Case 2: The first execution trigger condition is met but the second execution trigger condition is not met.

S308b: The UE determines that the CHO is triggered but the CPAC is not triggered. For example, the PCell 2 meets the first execution trigger condition, and neither the PSCell 4 nor the PSCell 5 meets the second execution trigger condition. In this case, the UE may attempt to access the PCell 2, that is, use the PCell 2 as a target PCell.

S309b: The UE sends an RRC configuration complete message to a second C-MN, and correspondingly, the second C-MN receives the RRC configuration complete message sent by the UE.

The second C-MN is a C-MN that manages the PCell 2. The RRC configuration complete message may be used by the UE to establish a connection to the second C-MN. The UE performs only PCell handover.

S310b: The second C-MN sends a handover complete message to the S-MN.

The second C-MN determines that the UE completes the cell handover, and sends the handover complete message to the S-MN.

It may be understood that, in the case 2, if the first RRC configuration message is implemented in the implementation form 1 or the implementation form 2, the UE may determine to maintain a CPAC configuration, that is, subsequently still use the existing CPAC configuration to determine whether to perform cell handover. If the first RRC configuration message is implemented in the implementation form 3, the UE may delete a stored CPAC configuration, and subsequently wait for a new CPAC configuration to determine whether to perform cell handover.

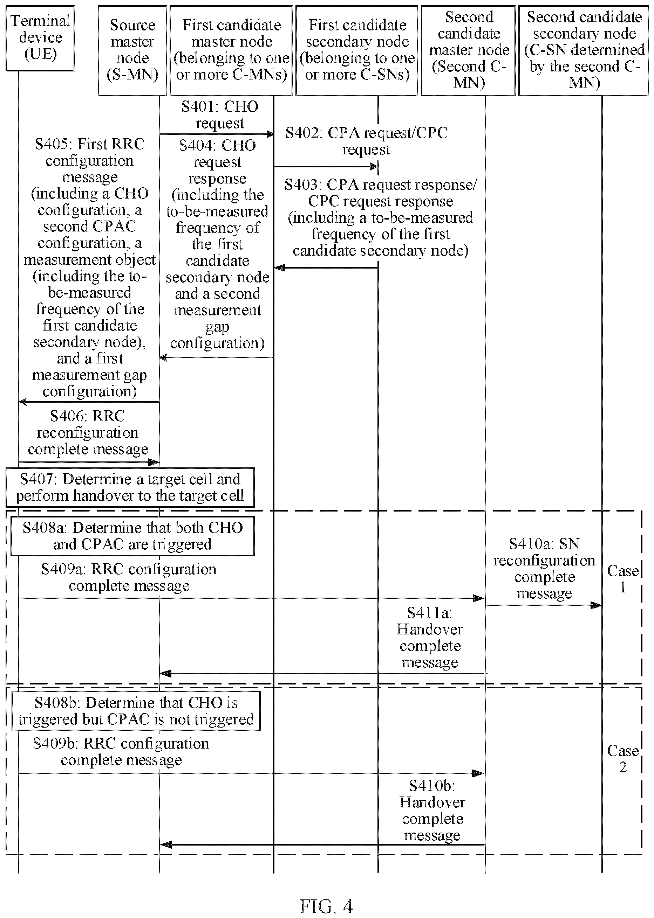

FIG. 4 is a flowchart of a measurement configuration method in a second example according to an embodiment of this application. A difference between the second example and the first example lies in that a first C-MN may configure a measurement gap based on a to-be-measured frequency of a first S-SN and a to-be-measured frequency of the first C-MN, and send the measurement gap to an S-MN.

S401: The S-MN sends a CHO request to one or more C-MNs, and correspondingly, the one or more C-MNs receive the CHO request sent by the S-MN. For details, refer to related content of S301.

S402: The first C-MN sends a CPA request to one or more C-SNs, and correspondingly, the one or more C-SNs receive the CPA request sent by the first C-MN. For details, refer to related content of S302.

S403: A first C-SN sends a CPA request response to the first C-MN, and correspondingly, the first C-MN receives the CPA request response sent by the first C-SN. For details, refer to related content of S303.

In another example, the first C-MN may send a CPC request to the one or more C-SNs, and the first C-SN may send a CPC request response to the first C-MN. Details are not described again.

S404: The first C-MN sends a CHO request response to the S-MN, and correspondingly, the S-MN receives the CHO request response sent by the first C-MN.

The CHO request response may include a to-be-measured frequency of the first C-SN and a second measurement gap configuration. A second measurement gap is a measurement gap that may be configured by the first C-MN based on the to-be-measured frequency of the first S-SN and the to-be-measured frequency of the first C-MN. It may alternatively be understood as that, in addition to providing the to-be-measured frequency of the first C-SN for the S-MN, the first C-MN may further configure a gap, for example, the second measurement gap, based on the to-be-measured frequency of the first C-SN and the to-be-measured frequency of the first C-MN. If the S-MN receives the second measurement gap configuration sent by the first C-MN, the S-MN may determine a first measurement gap based on the second measurement gap configuration, a to-be-measured frequency of the S-MN, and a to-be-measured frequency of an S-SN. It may alternatively be understood as that the second measurement gap may be used to assist the S-MN in configuring a more proper gap for UE. For example, if the first measurement gap is greater than the second measurement gap, the S-MN may configure the first measurement gap for the UE. On the contrary, if the second measurement gap is greater than the first measurement gap, the S-MN may configure the second measurement gap for the UE. In this way, sufficient time is reserved for the UE to complete measurement of a frequency that needs to be measured.

S405: The S-MN sends a first RRC configuration message to the UE, and correspondingly, the UE receives the first RRC configuration message sent by the S-MN. For details, refer to related content of S305. Details are not described herein again. Similar to the procedure shown in FIG. 3, the S-MN may further send a first measurement gap configuration and a measurement gap type to the S-SN. For details, refer to related content in the embodiment in FIG. 3. Details are not described herein again.

S406: The UE sends an RRC reconfiguration complete message to the S-MN, and correspondingly, the S-MN receives the RRC reconfiguration complete message sent by the UE. For details, refer to related content of S306. Details are not described herein again.

S407: The UE determines a target cell and performs handover to the target cell.

Similar to S307, there are also two cases based on different execution trigger conditions that are met. To be specific, S408a to S411a are performed in a case 1. For details, refer to S308a to S311a. Details are not described again. Similarly, S408b to S410b are performed in a case 2. For details, refer to S308b to S310b. Details are not described again.

Case 1: Both a first execution trigger condition and a second execution trigger condition are met.

S408a: The UE determines that both CHO and CPAC are triggered. For example, a PCell 2 meets the first execution trigger condition, and a PSCell 4 meets the second execution trigger condition. In this case, the UE may attempt to access the PCell 2, and may further attempt to perform PSCell change, that is, change to the PSCell 4. The PCell 2 may be understood as a target PCell, and the PSCell 4 may be understood as a target PSCell.

S409a: The UE sends an RRC configuration complete message to a second C-MN, and correspondingly, the second C-MN receives the RRC configuration complete message sent by the UE.

The second C-MN is a C-MN that manages the PCell 2. The RRC configuration complete message includes identification information of the target PSCell. The foregoing example is still used. The RRC configuration complete message may include an ID of the PSCell 4.

S410a: The second C-MN sends an SN reconfiguration complete message to a second C-SN, and correspondingly, the second C-SN receives the SN reconfiguration complete message sent by the second C-MN.

The second C-MN may determine, based on the ID of the PSCell 4, to send the SN reconfiguration complete message to the second C-SN, where the SN reconfiguration complete message may be used by the UE to perform PSCell change.

S411a: The second C-MN sends a handover complete message to the S-MN.

The second C-MN determines that the UE completes cell handover, and may send the handover complete message to the S-MN.

Case 2: A first execution trigger condition is met but a second execution trigger condition is not met.

S408b: The UE determines that CHO is triggered but CPAC is not triggered. For example, a PCell 2 meets the first execution trigger condition, and neither a PSCell 4 nor a PSCell 5 meets the second execution trigger condition. In this case, the UE may attempt to access the PCell 2, that is, use the PCell 2 as a target PCell.

S409b: The UE sends an RRC configuration complete message to a second C-MN, and correspondingly, the second C-MN receives the RRC configuration complete message sent by the UE.

The second C-MN is a C-MN that manages the PCell 2. The RRC configuration complete message may be used by the UE to establish a connection to the second C-MN. The UE performs only PCell handover.

S410b: The second C-MN sends a handover complete message to the S-MN.

The second C-MN determines that the UE completes the cell handover, and sends the handover complete message to the S-MN.

The difference between the second example and the first example lies in that the first C-MN may configure the second measurement gap and provide the second measurement gap for the S-MN. For a similarity between the second example and the first example, refer to related descriptions of the first example. Details are not described herein again.

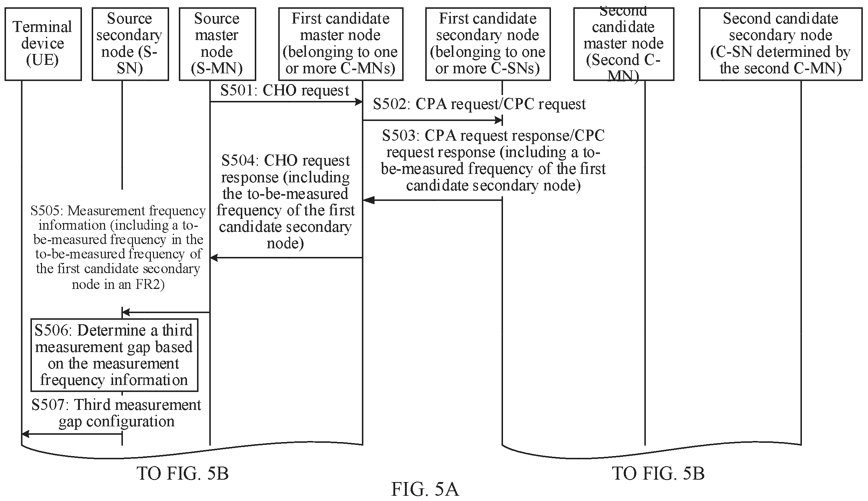

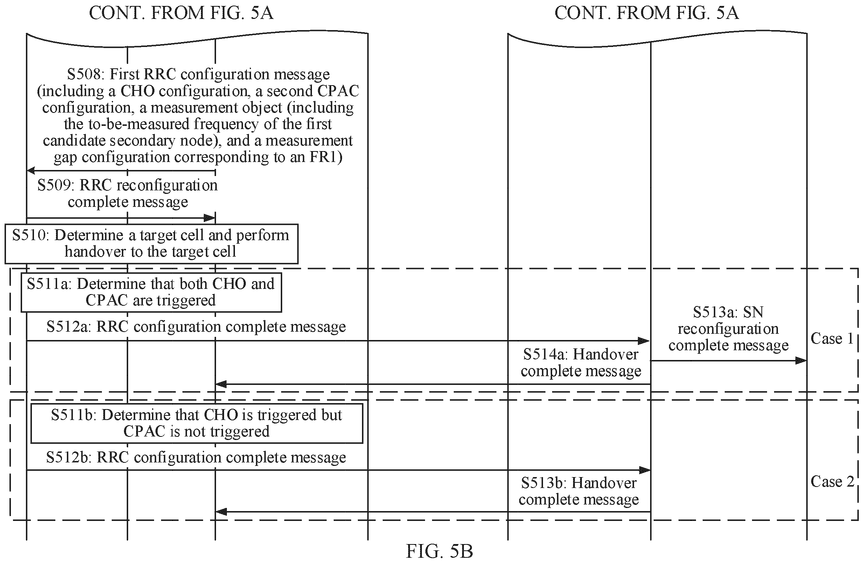

FIG. 5A and FIG. 5B are a flowchart of a measurement configuration method in a third example according to an embodiment of this application. In the third example, an S-MN provides a to-be-measured frequency in an FR2 for an S-SN, and the S-SN configures a measurement gap in the FR2 for UE. The S-MN may configure a measurement gap in an FR1. It may alternatively be understood as that the S-MN and the S-SN negotiate to complete the gap configuration, so as to implement measurement gap configuration in an EN-DC scenario and an NGEN-DC scenario.

S501: The S-MN sends a CHO request to one or more C-MNs, and correspondingly, the one or more C-MNs receive the CHO request sent by the S-MN. For details, refer to related content of S301.

S502: A first C-MN sends a CPA request to one or more C-SNs, and correspondingly, the one or more C-SNs receive the CPA request sent by the first C-MN. For details, refer to related content of S302.

S503: A first C-SN sends a CPA request response to the first C-MN, and correspondingly, the first C-MN receives the CPA request response sent by the first C-SN. For details, refer to related content of S303.

In another example, the first C-MN may send a CPC request to the one or more C-SNs, and the first C-SN may send a CPC request response to the first C-MN. Details are not described again. S504: The first C-MN sends a CHO request response to the S-MN, and correspondingly, the S-MN receives the CHO request response sent by the first C-MN. For details, refer to related content of S404. Details are not described herein again.

S505: The S-MN sends measurement frequency information to the S-SN, and correspondingly, the S-SN receives the measurement frequency information sent by the S-MN. The measurement frequency information indicates a to-be-measured frequency in a to-be-measured frequency of the first C-SN in the FR2. It may be understood that both a to-be-measured frequency of the S-MN and a to-be-measured frequency of the first C-MN are in the FR1, and to-be-measured frequencies of the S-SN and the first C-SN may be in the FR1, or may be in the FR2. However, if a measurement gap is configured for an FR, the S-MN can determine only the measurement gap configuration in the FR1. Therefore, the S-MN may provide the to-be-measured frequency, in the FR2, in the to-be-measured frequency of the first C-SN for the S-SN. Therefore, the S-SN determines the measurement gap configuration in the FR2.

S506: The S-SN determines a third measurement gap based on the measurement frequency information.

The S-SN determines the third measurement gap based on the to-be-measured frequency in the to-be-measured frequency of the first C-SN in the FR2.

S507: The S-SN sends a third measurement gap configuration to the UE, and correspondingly, the UE receives the third measurement gap sent by the S-SN.

The S-SN may provide a measurement gap of the to-be-measured frequency in the FR2 for the UE, that is, the third measurement gap.

S508: The S-MN sends a first RRC configuration message to the UE, and correspondingly, the UE receives the first RRC configuration message sent by the S-MN.

A difference from S405 lies in that a measurement configuration in the first RRC configuration message includes the measurement gap configuration corresponding to the to-be-measured frequency in the FR1, for example, referred to as a fourth measurement gap configuration that is configured by the S-MN based on the to-be-measured frequency in the FR1. For the UE, a source of the measurement gap configuration includes two parts. One part is from the S-MN, that is, the measurement gap configuration of the to-be-measured frequency in the FR1, and the other part is from the S-SN, that is, the measurement gap configuration of the to-be-measured frequency in the FR2. In the example, because the S-MN and the S-SN negotiate to complete the measurement gap configuration, the example is applicable to the EN-DC scenario and the NGEN-DC scenario.

S509: The UE sends an RRC reconfiguration complete message to the S-MN, and correspondingly, the S-MN receives the RRC reconfiguration complete message sent by the UE. For details, refer to related content of S306. Details are not described herein again.

S510: The UE determines a target cell and performs handover to the target cell.

Similar to S307, there are also two cases based on different execution trigger conditions that are met. To be specific, S511a to S514a are performed in a case 1. For details, refer to S308a to S311a. Details are not described again. Similarly, S511b to S513b are performed in a case 2. For details, refer to S308b to S310b. Details are not described again.

Case 1: A first execution trigger condition and a second execution trigger condition are met.

S511a: The UE determines that both CHO and CPAC are triggered. For example, a PCell 2 meets the first execution trigger condition, and a PSCell 4 meets the second execution trigger condition. In this case, the UE may attempt to access the PCell 2, and may further attempt to perform PSCell change, that is, change to the PSCell 4. The PCell 2 may be understood as a target PCell, and the PSCell 4 may be understood as a target PSCell.

S512a: The UE sends an RRC configuration complete message to a second C-MN, and correspondingly, the second C-MN receives the RRC configuration complete message sent by the UE.

The second C-MN is a C-MN that manages the PCell 2. The RRC configuration complete message includes identification information of the target PSCell. The foregoing example is still used. The RRC configuration complete message may include an ID of the PSCell 4.

S513a: The second C-MN sends an SN reconfiguration complete message to a second C-SN, and correspondingly, the second C-SN receives the SN reconfiguration complete message sent by the second C-MN.

The second C-MN may determine, based on the ID of the PSCell 4, to send the SN reconfiguration complete message to the second C-SN, where the SN reconfiguration complete message may be used by the UE to perform PSCell change.

S514a: The second C-MN sends a handover complete message to the S-MN.

The second C-MN determines that the UE completes cell handover, and may send the handover complete message to the S-MN.

Case 2: A first execution trigger condition is met but a second execution trigger condition is not met.

S511b: The UE determines that CHO is triggered but CPAC is not triggered. For example, a PCell 2 meets the first execution trigger condition, and neither a PSCell 4 nor a PSCell 5 meets the second execution trigger condition. In this case, the UE may attempt to access the PCell 2, that is, use the PCell 2 as a target PCell.

S512b: The UE sends an RRC configuration complete message to a second C-MN, and correspondingly, the second C-MN receives the RRC configuration complete message sent by the UE.

The second C-MN is a C-MN that manages the PCell 2. The RRC configuration complete message may be used by the UE to establish a connection to the second C-MN. The UE performs only PCell handover.

S513b: The second C-MN sends a handover complete message to the S-MN.

The second C-MN determines that the UE completes the cell handover, and sends the handover complete message to the S-MN.

A difference between the third example and the first example lies in that the S-MN may provide the to-be-measured frequency in the to-be-measured frequency of the candidate SN in the FR2 for the S-SN, the S-SN provides, for the UE, the measurement gap configuration corresponding to the FR2, and the S-MN provides, for the UE, the measurement gap configuration corresponding to the FR1, so that the third example is applicable to the EN-DC scenario and the NGEN-DC scenario. For a similarity between the third example and the first example, refer to related descriptions of the first example. Details are not described herein again.

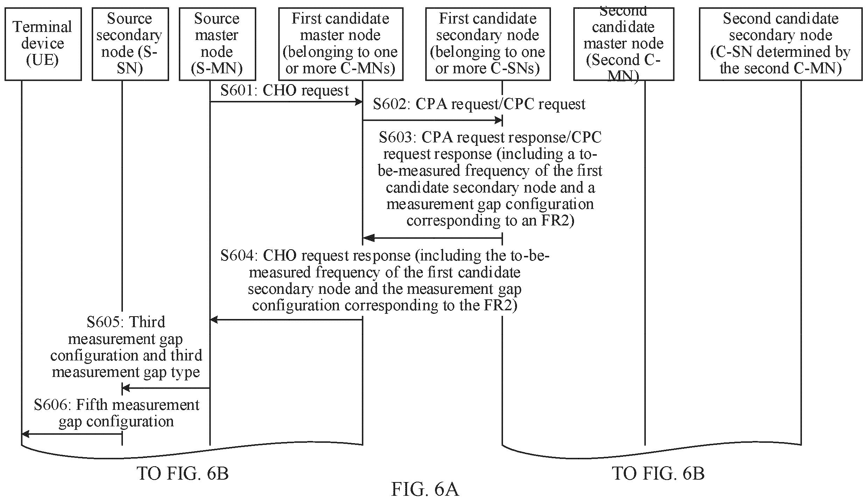

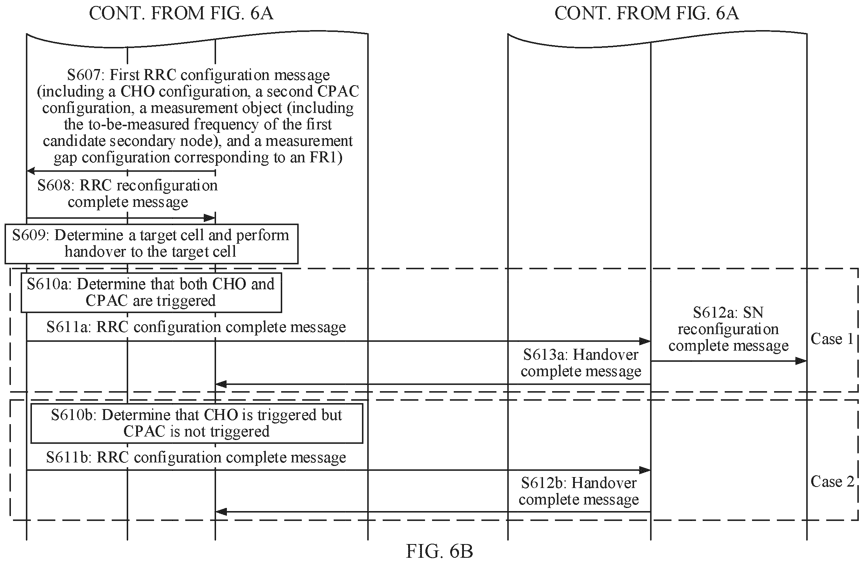

FIG. 6A and FIG. 6B are a flowchart of a measurement configuration method in a fourth example according to an embodiment of this application. In the fourth example, a first C-SN may configure a measurement gap corresponding to an FR2, and indicate the measurement gap to a first C-MN, and the first C-MN indicates the measurement gap corresponding to the FR2 to an S-MN. The S-MN indicates the measurement gap corresponding to the FR2 to an S-SN. Finally, the S-SN configures the measurement gap for UE based on the measurement gap that corresponds to the FR2 and that is indicated by the S-MN.

S601: The S-MN sends a CHO request to one or more C-MNs, and correspondingly, the one or more C-MNs receive the CHO request sent by the S-MN. For details, refer to related content of S301. Details are not described herein again.

S602: The first C-MN sends a CPA request (or a CPC request) to one or more C-SNs, and correspondingly, the one or more C-SNs receive the CPA request (or the CPC request) sent by the first C-MN. For details, refer to related content of S302. Details are not described herein again.

S603: The first C-SN sends a CPA request response to the first C-MN, and correspondingly, the first C-MN receives the CPA request response sent by the first C-SN.

A difference from the first example lies in that the CPA request response includes a measurement gap configuration determined by the first C-SN based on a to-be-measured frequency in the FR2, that is, a measurement gap configuration corresponding to the FR2. For details of other content further included in the CAP request response, refer to related descriptions of S303. Details are not described herein again.

S604: The first C-MN sends a CHO request response to the S-MN, and correspondingly, the S-MN receives the CHO request response sent by the first C-MN.

A difference from the first example lies in that the CHO request response further includes the measurement gap configuration corresponding to the FR2. For details of other content further included in the CHO request response, refer to related descriptions of S304. Details are not described herein again.

S605: The S-MN sends a third measurement gap configuration and a measurement gap type to the S-SN, and correspondingly, the S-SN receives the third measurement gap configuration and the measurement gap type that are sent by the S-MN. The measurement gap type indicates a type of the third measurement gap configuration, for example, a per-UE gap or a per-FR gap.

The third measurement gap configuration may be obtained by the S-MN from the CHO request response, or may be a measurement gap configuration re-determined by the S-MN based on the measurement gap configuration obtained from the CHO request response.

S606: The S-SN sends a fifth measurement gap configuration to the UE, and correspondingly, the UE receives the fifth measurement gap sent by the S-SN.

The S-SN receives the third measurement gap configuration and the third measurement gap type, and may configure, for the UE, the measurement gap corresponding to the FR2, for example, referred to as the fifth measurement gap. If the third measurement gap type indicates the per-FR gap, the S-SN may use the third measurement gap configuration as the fifth measurement gap configuration. Alternatively, the S-SN may determine the fifth measurement gap configuration based on the third measurement gap configuration and a to-be-measured frequency of the S-SN in the FR2.

S607: The S-MN sends a first RRC configuration message to the UE, and correspondingly, the UE receives the first RRC configuration message sent by the S-MN.

A difference from the first example lies in that a measurement configuration in the first RRC configuration message includes a measurement gap configuration of a to-be-measured frequency in an FR1. For other content included in the first RRC configuration message, refer to related descriptions of S205. Details are not described herein again.

S608: The UE sends an RRC reconfiguration complete message to the S-MN, and correspondingly, the S-MN receives the RRC reconfiguration complete message sent by the UE. For details, refer to related content of S306. Details are not described herein again.

S609: The UE determines a target cell and performs handover to the target cell.

Similar to S510, there are also two cases based on different execution trigger conditions that are met. To be specific, S610a to S613a are performed in a case 1. For details, refer to S511a to S514a. Details are not described again. Similarly, S610b to S612b are performed in a case 2. For details, refer to S511b to S513b. Details are not described again.

Case 1: A first execution trigger condition and a second execution trigger condition are met.

S610a: The UE determines that both CHO and CPAC are triggered.

S611a: The UE sends an RRC configuration complete message to a second C-MN, and correspondingly, the second C-MN receives the RRC configuration complete message sent by the UE. The second C-MN is a C-MN that manages a target PCell. The RRC configuration complete message includes identification information of a target PSCell.

S612a: The second C-MN sends an SN reconfiguration complete message to a second C-SN, and correspondingly, the second C-SN receives the SN reconfiguration complete message sent by the second C-MN.

S613a: The second C-MN sends a handover complete message to the S-MN.

Case 2: A first execution trigger condition is met but a second execution trigger condition is not met.

S610b: The UE determines that CHO is triggered but CPAC is not triggered.

S611b: The UE sends an RRC configuration complete message to a second C-MN, and correspondingly, the second C-MN receives the RRC configuration complete message sent by the UE. The second C-MN is a C-MN that manages a target PCell. The RRC configuration complete message may be used by the UE to establish a connection to the second C-MN. The UE performs only PCell handover.

S612b: The second C-MN sends a handover complete message to the S-MN.

A difference between the fourth example and the third example lies in that the S-MN may determine a measurement gap based on a to-be-measured frequency of the C-SN, and provide the measurement gap and a type of the measurement gap for the S-SN, the S-SN provides, for the UE, the measurement gap configuration corresponding to the FR2, and the S-MN provides, for the UE, the measurement gap configuration corresponding to the FR1, so that the fourth example is applicable to an EN-DC scenario and an NGEN-DC scenario. For a similarity between the fourth example and the third example, refer to related descriptions of the third example. Details are not described herein again.

In embodiments of this application, to complete the CPAC more quickly, both the CHO and the CPAC may be configured. When the CHO and the CPAC are configured, the C-MN may provide the to-be-measured frequency of the C-SN for the S-MN. In this way, the S-MN may configure the measurement object based on the to-be-measured frequency of the C-SN, so that when evaluating whether the trigger condition of the CHO is met, in addition to measuring the to-be-measured frequency of the C-SN, the terminal device further measures the to-be-measured frequency of the S-SN, that is, further evaluates whether the trigger condition of the CPAC is met, to increase a CPAC trigger opportunity. In this way, the terminal device completes the CPAC more quickly, and this helps the terminal device access a more proper target cell, to improve communication quality after the terminal device accesses the target cell.

In addition, according to the method provided in embodiments of this application, the S-MN and the S-SN may negotiate to complete the measurement gap configuration. For example, the S-MN may provide the to-be-measured frequency in the FR2 for the S-SN. The S-SN configures the measurement gap corresponding to the FR2, and provides the measurement gap for the terminal device. The S-MN provides, for the terminal device, the measurement gap corresponding to the FR1. This is applicable to the measurement gap configuration in the EN-DC scenario and the NGEN-DC scenario.

In embodiments provided in this application, the method provided in embodiments of this application is described from a perspective of interaction between the terminal device, the source master node, the candidate master node, the candidate secondary node, and the source secondary node. To implement functions in the method provided in embodiments of this application, the source master node and the candidate master node each may include a hardware structure and/or a software module, to implement the foregoing functions in a form of the hardware structure, the software module, or a combination of the hardware structure and the software module. Whether a function in the foregoing functions is performed by the hardware structure, the software module, or the combination of the hardware structure and the software module depends on a particular application and a design constraint condition of the technical solutions.

The following describes, with reference to the accompanying drawings, communication apparatuses configured to implement the foregoing method in embodiments of this application.

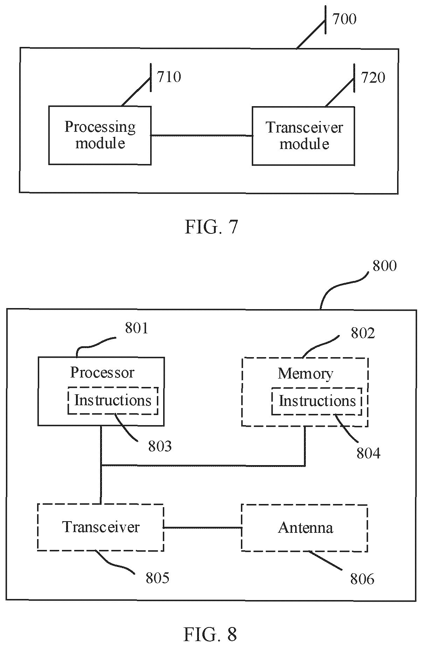

FIG. 7 is a block diagram of a communication apparatus 700 according to an embodiment of this application. The communication apparatus 700 may include a processing module 710 and a transceiver module 720. Optionally, a storage unit may be further included. The storage unit may be configured to store instructions (code or a program) and/or data. The processing module 710 and the transceiver module 720 may be coupled to the storage unit. For example, the processing module 710 may read the instructions (the code or the program) and/or the data in the storage unit, to implement a corresponding method. The foregoing modules may be independently disposed, or may be partially or completely integrated.

In some possible implementations, the communication apparatus 700 can correspondingly implement behavior and functions of the source master node (S-MN) in the foregoing method embodiments. The communication apparatus 700 may be the source master node, may be a component (for example, a chip or a circuit) used in the source master node, or may be a chip or a chipset in the source master node, or a part of the chip configured to perform a related method function.

For example, the communication apparatus 700 implements the method performed by the S-MN in any one of the embodiments shown in FIG. 2 to FIG. 6A and FIG. 6B. The transceiver module 720 may be configured to: send a CHO request to one or more candidate master nodes, and receive a CHO request response sent by a first candidate master node, where the CHO request response includes a CHO configuration, a first CPAC configuration, and a to-be-measured frequency of a candidate secondary node. The first candidate master node belongs to the one or more candidate master nodes. The processing module 710 may be configured to determine a first RRC configuration message, where the first RRC configuration message includes the CHO configuration, a second CPAC configuration, and a measurement configuration. The second CPAC configuration is determined based on the first CPAC configuration. The measurement configuration includes a measurement object and a first measurement gap configuration corresponding to the measurement object. The measurement object includes a to-be-measured frequency of the source master node, a to-be-measured frequency of the first candidate master node, a to-be-measured frequency of a source secondary node, and the to-be-measured frequency of the candidate secondary node. The transceiver module 720 is further configured to send the first RRC configuration message to a terminal device.

In an optional implementation, the processing module 710 is further configured to determine the first measurement gap configuration based on the measurement object. The transceiver module 720 is further configured to send the first measurement gap configuration and a measurement gap type to the source secondary node.

In an optional implementation, the CHO request response further includes a second measurement gap configuration, and the second measurement gap configuration is determined based on the to-be-measured frequency of the first candidate master node and the to-be-measured frequency of the candidate secondary node. The processing module 710 is further configured to determine the first measurement gap configuration based on the second measurement gap configuration. The transceiver module 720 is further configured to send the first measurement gap configuration and a measurement gap type to the source secondary node.

In an optional implementation, the CHO request response further includes a third measurement gap configuration, and the third measurement gap configuration is configured based on a frequency, in an FR2, in the to-be-measured frequency of the candidate secondary node.

In an optional implementation, the transceiver module 720 is further configured to send measurement frequency information to the source secondary node, where the measurement frequency information indicates a frequency, in an FR2, in the to-be-measured frequency of the candidate secondary node.

In an optional implementation, a lowest frequency of the FR2 is greater than or equal to 24.25 GHz, and a highest frequency of the FR2 is less than or equal to 52.6 GHz.

In an optional implementation, the processing module 710 is further configured to determine a fourth measurement gap configuration based on the to-be-measured frequency of the candidate secondary node, where the to-be-measured frequency of the candidate secondary node is a frequency in an FR1.

In an optional implementation, the CHO request response includes an identifier and/or a data forwarding address of the candidate secondary node.

In an optional implementation, the first RRC configuration message includes a second RRC configuration message and a first execution trigger condition corresponding to the first candidate master node, where the second RRC configuration message includes a radio air interface configuration of the first candidate master node, a radio air interface configuration of the candidate secondary node, and a second execution trigger condition corresponding to a candidate PSCell, and an information element other than the second RRC configuration message in the first RRC configuration message further includes identification information and the second execution trigger condition of the candidate PSCell. The candidate PSCell is managed by the candidate secondary node.

In an optional implementation, the first RRC configuration message includes a second RRC configuration message and a first execution trigger condition corresponding to the first candidate master node, where the second RRC configuration message includes a radio air interface configuration of the first candidate master node, a radio air interface configuration of the candidate secondary node, and a second execution trigger condition corresponding to a candidate PSCell, and an information element other than the second RRC configuration message in the first RRC configuration message does not include identification information or the second execution trigger condition of the candidate PSCell. The candidate PSCell is managed by the candidate secondary node.

In an optional implementation, the first RRC configuration message includes a second RRC configuration message and a first execution trigger condition corresponding to the first candidate master node, where the second RRC configuration message includes a radio air interface configuration of the first candidate master node and a radio air interface configuration of the candidate secondary node, the second RRC configuration message does not include a second execution trigger condition corresponding to a candidate PSCell, and an information element other than the second RRC configuration message in the first RRC configuration message further includes identification information and the second execution trigger condition of the candidate PSCell. The candidate PSCell is managed by the candidate secondary node.

For another example, the communication apparatus 700 implements the method performed by the first candidate master node in any one of the embodiments of FIG. 2 to FIG. 6A and FIG. 6B. The transceiver module 720 is configured to: receive a CHO request sent by a source master node, send a CPA request to a candidate secondary node, and receive a CPA request response sent by the candidate secondary node, where the CPA request response includes a to-be-measured frequency of the candidate secondary node. The processing module 710 is configured to determine a CHO request response, where the CHO request response includes a CHO configuration, first CPAC configuration information, and the to-be-measured frequency of the candidate secondary node. The transceiver module 720 is further configured to send the CHO request response to the source master node, where the CHO request response includes the CHO configuration, the first CPAC configuration, and the to-be-measured frequency of the candidate secondary node. Alternatively, the transceiver module 720 is configured to: receive a CHO request sent by a source master node, send a CPC request to a candidate secondary node, and receive a CPC request response sent by the candidate secondary node, where the CPC request response includes a to-be-measured frequency of the candidate secondary node. The processing module 710 is configured to determine a CHO request response, where the CHO request response includes a CHO configuration, a first CPAC configuration, and the to-be-measured frequency of the candidate secondary node. The transceiver module 720 is further configured to send the CHO request response to the source master node, where the CHO request response includes the CHO configuration, the first CPAC configuration, and the to-be-measured frequency of the candidate secondary node.

In an optional implementation, the to-be-measured frequency of the candidate secondary node included in the CHO request response is all to-be-measured frequencies of the candidate secondary node.

In an optional implementation, the CHO request response includes an identifier and/or a data forwarding address of the candidate secondary node.

In an optional implementation, the processing module 710 is further configured to determine a measurement gap configuration based on the to-be-measured frequency of the candidate secondary node. The transceiver module 720 is further configured to send the measurement gap configuration to the source master node.

It should be understood that the processing module 710 in this embodiment of this application may be implemented by a processor or a processor-related circuit component, and the transceiver module 720 may be implemented by a transceiver, a transceiver-related circuit component, or a communication interface.

FIG. 8 is a block diagram of a communication apparatus 800 according to an embodiment of this application. The communication apparatus 800 may be a source master node, and can implement functions of the source master node in the method provided in embodiments of this application. Alternatively, the communication apparatus 800 may be an apparatus that can support the source master node in implementing corresponding functions in the method provided in embodiments of this application. The communication apparatus 800 may be a chip system. In this embodiment of this application, the chip system may include a chip, or may include a chip and another discrete device. For a specific function, refer to the descriptions in the foregoing method embodiments. Alternatively, the communication apparatus 800 may be a candidate master node, and can implement functions of the first candidate master node in the method provided in embodiments of this application. Alternatively, the communication apparatus 800 may be an apparatus that can support the candidate master node in implementing corresponding functions in the method provided in embodiments of this application. The communication apparatus 800 may be a chip system. In this embodiment of this application, the chip system may include a chip, or may include a chip and another discrete device. For a specific function, refer to the descriptions in the foregoing method embodiments.

The communication apparatus 800 includes one or more processors 801 that may be configured to implement or support the communication apparatus 800 in implementing the functions of the source master node in the method provided in embodiments of this application. For details, refer to the detailed descriptions in the method examples. Details are not described herein again. The one or more processors 801 may alternatively be configured to implement or support the communication apparatus 800 in implementing the functions of the first candidate master node in the method provided in embodiments of this application. For details, refer to the detailed descriptions in the method examples. Details are not described herein again. The processor 801 may also be referred to as a processing unit or a processing module, and may implement a specific control function. The processor 801 may be a general-purpose processor, a dedicated processor, or the like. For example, the processor includes a central processing unit, an application processor, a modem processor, a graphics processing unit, an image signal processor, a digital signal processor, a video codec processor, a controller, a memory, and/or a neural network processor. The central processing unit may be configured to: control the communication apparatus 800, execute a software program, and/or process data. Different processors may be independent devices, or may be integrated into one or more processors, for example, integrated into one or more application-specific integrated circuits.

Optionally, the communication apparatus 800 includes one or more memories 802, configured to store instructions 804. The instructions may be run on the processor 801, to enable the communication apparatus 800 to perform the method described in the foregoing method embodiments. The memory 802 and the processor 801 may be separately disposed, or may be integrated together, or it may be considered that the memory 802 is coupled to the processor 801. The coupling in this embodiment of this application may be an indirect coupling or a communication connection between apparatuses, units, or modules in an electrical form, a mechanical form, or another form, and is for information exchange between the apparatuses, the units, or the modules. The processor 801 may operate in collaboration with the memory 802. At least one of at least one memory may be included in the processor. It should be noted that the memory 802 is not necessary, and therefore is shown by using dashed lines in FIG. 8.

Optionally, the memory 802 may further store data. The processor and the memory may be separately disposed, or may be integrated together. In this embodiment of this application, the memory 802 may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of an instruction or a data structure and that can be accessed by a computer, but is not limited thereto. The memory in this embodiment of this application may alternatively be a circuit or any other apparatus that can implement a storage function, and is configured to store the program instructions and/or the data.

Optionally, the communication apparatus 800 may include instructions 803 (which may also be referred to as code or programs sometimes). The instructions 803 may be run on the processor, to enable the communication apparatus 800 to perform the method described in the foregoing embodiments. The processor 801 may store data.

Optionally, the communication apparatus 800 may further include a transceiver 805 and an antenna 806. The transceiver 805 may be referred to as a transceiver unit, a transceiver module, a transceiver machine, a transceiver circuit, a transceiver, an input/output interface, or the like, and is configured to implement a transceiver function of the communication apparatus 800 through the antenna 806.

The processor 801 and the transceiver 805 described in this application may be implemented on an integrated circuit (integrated circuit, IC), an analog IC, a radio frequency integrated circuit (radio frequency identification, RFID), a mixed-signal IC, an ASIC, a printed circuit board (printed circuit board, PCB), an electronic device, or the like. The communication apparatus described in this specification may be implemented by an independent device (for example, an independent integrated circuit or a mobile phone), or may be a part of a large device (for example, a module that may be embedded in another device). For details, refer to the foregoing descriptions about the terminal device and the network device. Details are not described herein again.

Optionally, the communication apparatus 800 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the communication apparatus 800 may include more or fewer components, some components are integrated, or some components are split. These components may be implemented by hardware, software, or a combination of software and hardware.

It should be noted that the communication apparatus in the foregoing embodiment may be a source master node (or a first candidate master node), may be a circuit, or may be a chip used in the source master node (or the first candidate master node), or another combined device, component, or the like having functions of the foregoing source master node (or the first candidate master node). When the communication apparatus is the source master node (or the first candidate master node), the transceiver module may be a transceiver, and may include an antenna, a radio frequency circuit, and the like, and the processing module may be a processor, for example, a central processing unit (central processing unit, CPU). When the communication apparatus is the component having the functions of the foregoing source master node (or the first candidate master node), the transceiver module may be a radio frequency unit, and the processing module may be a processor. When the communication apparatus is a chip system, the communication apparatus may be a field programmable gate array (field programmable gate array, FPGA), an application-specific integrated chip (application-specific integrated circuit, ASIC), a system on chip (system on chip, SoC), a CPU, a network processor (network processor, NP), a digital signal processing circuit (digital signal processor, DSP), a microcontroller (micro controller unit, MCU), a programmable controller (programmable logic device, PLD), or another integrated chip. The processing module may be a processor of the chip system. The transceiver module or the communication interface may be an input/output interface or an interface circuit of the chip system. For example, the interface circuit may be a code/data read/write interface circuit. The interface circuit may be configured to: receive code instructions (the code instructions are stored in a memory, and may be directly read from the memory, or may be read from the memory through another device) and transmit the code instructions to the processor. The processor may be configured to run the code instructions to perform the method in the foregoing method embodiments. For another example, the interface circuit may alternatively be a signal transmission interface circuit between the communication processor and a transceiver machine.

When the communication apparatus is a chip-type apparatus or circuit, the apparatus may include a transceiver unit and a processing unit. The transceiver unit may be an input/output circuit and/or a communication interface. The processing unit is an integrated processor, a microprocessor, or an integrated circuit.

An embodiment of this application further provides a communication system. Specifically, the communication system includes a source master node, at least one candidate master node, at least one candidate secondary node, a source secondary node, and a terminal device. For example, the communication system includes a source master node, a first candidate master node, a first candidate secondary node, and a terminal device that are configured to implement related functions in one or more of FIG. 2 to FIG. 6A and FIG. 6B. For details, refer to the related descriptions in the foregoing method embodiments. Details are not described herein again.

An embodiment of this application further provides a computer-readable storage medium, including instructions. When the instructions are run on a computer, the computer is enabled to perform the method performed by the first candidate master node in one or more of FIG. 2 to FIG. 6A and FIG. 6B. Alternatively, when the instructions are run on a computer, the computer is enabled to perform the method performed by the source master node in one or more of FIG. 2 to FIG. 6A and FIG. 6B.

An embodiment of this application further provides a computer program product, including instructions. When the instructions are run on a computer, the computer is enabled to perform the method performed by the first candidate master node in one or more of FIG. 2 to FIG. 6A and FIG. 6B. Alternatively, when the instructions are run on a computer, the computer is enabled to perform the method performed by the source master node in one or more of FIG. 2 to FIG. 6A and FIG. 6B.

An embodiment of this application provides a chip system. The chip system includes a processor, and may further include a memory, to implement functions of the first candidate master node in the foregoing method, or to implement functions of the source master node in the foregoing method. The chip system may include a chip, or may include a chip and another discrete device.

It should be understood that sequence numbers of the foregoing processes do not mean execution sequences in various embodiments of this application. The execution sequences of the processes should be determined based on functions and internal logic of the processes, and should not constitute any limitation on implementation processes of embodiments of this application.

A person of ordinary skill in the art may be aware that various illustrative logical blocks (illustrative logical blocks) and steps (steps) described with reference to embodiments disclosed in this specification may be implemented by electronic hardware or a combination of computer software and electronic hardware. Whether the functions are performed by hardware or software depends on a particular application and a design constraint condition of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for specific working processes of the foregoing described system, apparatus, and unit, refer to corresponding processes in the foregoing method embodiments. Details are not described herein again.

In several embodiments provided in this application, it should be understood that the disclosed system, apparatus, and method may be implemented in another manner. For example, the foregoing described apparatus embodiments are merely examples. For example, division into the units is merely logic function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, that is, may be located in one position, or may be distributed on a plurality of network units. Some or all of the units may be selected based on actual needs to achieve the objectives of the solutions of embodiments.

When the functions are implemented in a form of a software functional unit and sold or used as an independent product, the functions may be stored in a computer-readable storage medium. Based on this understanding, a part that essentially contributes to the technical solutions of this application or a part of the technical solutions may be implemented in a form of a software product. The computer software product is stored in a storage medium, and includes several instructions for enabling a computer device (which may be a personal computer, a server, a network device, or the like) to perform all or some steps of the method in embodiments of this application. The foregoing storage medium includes any medium that can store program code, for example, a USB flash drive, a removable hard disk, a read-only memory (read-only memory, ROM), a RAM, a magnetic disk, or an optical disc.

It is clear that a person skilled in the art can make various modifications and variations to this application without departing from the scope of this application. Therefore, this application is intended to cover these modifications and variations of this application if they fall within the scope of the claims of this application and equivalent technologies thereof.

## Claims

1. A measurement configuration method, comprising:
sending, by a source master node, a conditional handover CHO request to one or more candidate master nodes;
receiving, by the source master node, a CHO request response sent by a first candidate master node, wherein the CHO request response comprises a CHO configuration and a to-be-measured frequency of a candidate secondary node, and the first candidate master node belongs to the one or more candidate master nodes; and
sending, by the source master node, a first radio resource control RRC configuration message to a terminal device, wherein the first RRC configuration message comprises the CHO configuration and a measurement configuration, the measurement configuration is determined by the source master node based on the CHO request response, and the measurement configuration comprises a measurement object and a first measurement gap configuration corresponding to the measurement object.

2. The method according to claim 1, wherein the method further comprises:
determining, by the source master node, the first measurement gap configuration based on the measurement object; and
sending, by the source master node, the first measurement gap configuration and a measurement gap type to a source secondary node, wherein the measurement gap type comprises a measurement gap type configured for the terminal device or a measurement gap type configured for a frequency range.

3. The method according to claim 1, wherein the CHO request response further comprises a second measurement gap configuration, and the second measurement gap configuration is determined based on a to-be-measured frequency of the first candidate master node and the to-be-measured frequency of the candidate secondary node; and the method further comprises:
determining, by the source master node, the first measurement gap configuration based on the second measurement gap configuration; and
sending, by the source master node, the first measurement gap configuration and a measurement gap type to a source secondary node, wherein the measurement gap type comprises a measurement gap type configured for the terminal device or a measurement gap type configured for a frequency range.

4. The method according to claim 1, wherein the CHO request response further comprises a third measurement gap configuration, and the third measurement gap configuration is configured based on a frequency, in a second frequency range FR2, in the to-be-measured frequency of the candidate secondary node.

5. The method according to claim 1, wherein the method further comprises:
sending, by the source master node, measurement frequency information to a source secondary node, wherein the measurement frequency information indicates a frequency, in an FR2, in the to-be-measured frequency of the candidate secondary node.

6. The method according to claim 4 or 5, wherein a lowest frequency of the FR2 is greater than or equal to 24.25 GHz, and a highest frequency of the FR2 is less than or equal to 52.6 GHz.

7. The method according to claim 5 or 6, wherein the method further comprises:
determining, by the source master node, a fourth measurement gap configuration based on the to-be-measured frequency of the candidate secondary node, wherein the to-be-measured frequency of the candidate secondary node is a frequency in a first frequency range FR1.

8. The method according to any one of claims 1 to 7, wherein the CHO request response comprises an identifier and/or a data forwarding address of the candidate secondary node.

9. The method according to any one of claims 1 to 7, wherein the first RRC configuration message comprises a second RRC configuration message and a first execution trigger condition corresponding to the first candidate master node, wherein
the second RRC configuration message comprises a radio air interface configuration of the first candidate master node, a radio air interface configuration of the candidate secondary node, and a second execution trigger condition corresponding to a candidate primary secondary cell PSCell, and an information element other than the second RRC configuration message in the first RRC configuration message further comprises identification information of the candidate PSCell and the second execution trigger condition;
the second RRC configuration message comprises a radio air interface configuration of the first candidate master node, a radio air interface configuration of the candidate secondary node, and a second execution trigger condition corresponding to a candidate PSCell, and an information element other than the second RRC configuration message in the first RRC configuration message does not comprise identification information of the candidate PSCell or the second execution trigger condition; or
the second RRC configuration message comprises a radio air interface configuration of the first candidate master node and a radio air interface configuration of the candidate secondary node, the second RRC configuration message does not comprise a second execution trigger condition corresponding to a candidate PSCell, and an information element other than the second RRC configuration message in the first RRC configuration message further comprises identification information of the candidate PSCell and the second execution trigger condition, wherein
the candidate PSCell is managed by the candidate secondary node.

10. A measurement configuration method, comprising:
receiving, by a candidate master node, a conditional handover CHO request sent by a source master node;
sending, by the candidate master node, a conditional primary secondary cell addition CPA or conditional primary secondary cell change CPC request to a candidate secondary node;
receiving, by the candidate master node, a CPA or CPC request response sent by the candidate secondary node, wherein the CPA or CPC request response comprises a to-be-measured frequency of the candidate secondary node; and
sending, by the candidate master node, a CHO request response to the source master node, wherein the CHO request response comprises a CHO configuration, a first conditional primary secondary cell addition and change CPAC configuration, and the to-be-measured frequency of the candidate secondary node.

11. The method according to claim 10, wherein the to-be-measured frequency of the candidate secondary node comprised in the CHO request response is all to-be-measured frequencies of the candidate secondary node.

12. The method according to claim 10 or 11, wherein the CHO request response comprises an identifier and/or a data forwarding address of the candidate secondary node.

13. The method according to any one of claims 10 to 12, wherein the method further comprises:
determining, by the candidate master node, a measurement gap configuration based on the to-be-measured frequency of the candidate secondary node; and
sending, by the candidate master node, the measurement gap configuration to the source master node.

14. A communication apparatus, comprising a transceiver module and a processing module, wherein
the transceiver module is configured to: send a conditional handover CHO request to one or more candidate master nodes, and receive a CHO request response sent by a first candidate master node, wherein the CHO request response comprises a CHO configuration and a to-be-measured frequency of a candidate secondary node, and the first candidate master node belongs to the one or more candidate master nodes;
the processing module is configured to determine a first radio resource control RRC configuration message, wherein the first RRC configuration message comprises the CHO configuration and a measurement configuration, the measurement configuration is determined by the communication apparatus based on the CHO request response, and the measurement configuration comprises a measurement object and a first measurement gap configuration corresponding to the measurement object; and
the transceiver module is further configured to send the first RRC configuration message to a terminal device.

15. The apparatus according to claim 14, wherein
the processing module is further configured to determine the first measurement gap configuration based on the measurement object; and
the transceiver module is further configured to send the first measurement gap configuration and a measurement gap type to a source secondary node, wherein the measurement gap type comprises a measurement gap type configured for the terminal device or a measurement gap type configured for a frequency range.

16. The apparatus according to claim 14, wherein the CHO request response further comprises a second measurement gap configuration, and the second measurement gap configuration is determined based on a to-be-measured frequency of the first candidate master node and the to-be-measured frequency of the candidate secondary node; the processing module is further configured to determine the first measurement gap configuration based on the second measurement gap configuration; and the transceiver module is further configured to send the first measurement gap configuration and a measurement gap type to a source secondary node, wherein the measurement gap type comprises a measurement gap type configured for the terminal device or a measurement gap type configured for a frequency range.

17. The apparatus according to claim 14, wherein the CHO request response further comprises a third measurement gap configuration, and the third measurement gap configuration is configured based on a frequency, in a second frequency range FR2, in the to-be-measured frequency of the candidate secondary node.

18. The apparatus according to claim 14, wherein the transceiver module is further configured to send measurement frequency information to a source secondary node, wherein the measurement frequency information indicates a frequency, in an FR2, in the to-be-measured frequency of the candidate secondary node.

19. The apparatus according to claim 17 or 18, wherein a lowest frequency of the FR2 is greater than or equal to 24.25 GHz, and a highest frequency of the FR2 is less than or equal to 52.6 GHz.

20. The apparatus according to claim 18 or 19, wherein the processing module is further configured to determine a fourth measurement gap configuration based on the to-be-measured frequency of the candidate secondary node, wherein the to-be-measured frequency of the candidate secondary node is a frequency in a first frequency range FR1.

21. The apparatus according to any one of claims 14 to 20, wherein the CHO request response comprises an identifier and/or a data forwarding address of the candidate secondary node.

22. The apparatus according to any one of claims 14 to 21, wherein the first RRC configuration message comprises a second RRC configuration message and a first execution trigger condition corresponding to the first candidate master node, wherein
the second RRC configuration message comprises a radio air interface configuration of the first candidate master node, a radio air interface configuration of the candidate secondary node, and a second execution trigger condition corresponding to a candidate primary secondary cell PSCell, and an information element other than the second RRC configuration message in the first RRC configuration message further comprises identification information of the candidate PSCell and the second execution trigger condition;
the second RRC configuration message comprises a radio air interface configuration of the first candidate master node, a radio air interface configuration of the candidate secondary node, and a second execution trigger condition corresponding to a candidate PSCell, and an information element other than the second RRC configuration message in the first RRC configuration message does not comprise identification information of the candidate PSCell or the second execution trigger condition; or
the second RRC configuration message comprises a radio air interface configuration of the first candidate master node and a radio air interface configuration of the candidate secondary node, the second RRC configuration message does not comprise a second execution trigger condition corresponding to a candidate PSCell, and an information element other than the second RRC configuration message in the first RRC configuration message further comprises identification information of the candidate PSCell and the second execution trigger condition, wherein
the candidate PSCell is managed by the candidate secondary node.

23. A communication apparatus, comprising a transceiver module and a processing module, wherein
the transceiver module is configured to: receive a conditional handover CHO request sent by a source master node; send a conditional primary secondary cell addition CPA or conditional primary secondary cell change CPC request to a candidate secondary node; and receive a CPA or CPC request response sent by the candidate secondary node, wherein the CPA or CPC request response comprises a to-be-measured frequency of the candidate secondary node;
the processing module is configured to determine a CHO request response, wherein the CHO request response comprises a CHO configuration, a first conditional primary secondary cell addition and change CPAC configuration, and the to-be-measured frequency of the candidate secondary node; and
the transceiver module is further configured to send the CHO request response to the source master node, wherein the CHO request response comprises the CHO configuration, the first CPAC configuration, and the to-be-measured frequency of the candidate secondary node.

24. The apparatus according to claim 23, wherein the to-be-measured frequency of the candidate secondary node comprised in the CHO request response is all to-be-measured frequencies of the candidate secondary node.

25. The apparatus according to claim 23 or 24, wherein the CHO request response comprises an identifier and/or a data forwarding address of the candidate secondary node.

26. The apparatus according to any one of claims 23 to 25, wherein the processing module is further configured to determine a measurement gap configuration based on the to-be-measured frequency of the candidate secondary node; and
the transceiver module is further configured to send the measurement gap configuration to the source master node.

27. A communication apparatus, comprising a processor and a memory, wherein the memory is configured to store one or more computer programs, the one or more computer programs comprise computer-executable instructions, and when the communication apparatus runs, the processor executes the one or more computer programs stored in the memory, to enable the communication apparatus to perform the method according to any one of claims 1 to 9 or the method according to any one of claims 10 to 13.

28. A communication system, wherein the system comprises a source master node and a candidate master node, the source master node is configured to implement the method according to any one of claims 1 to 9, and the candidate master node is configured to implement the method according to any one of claims 10 to 13.

29. A computer-readable storage medium, wherein the computer-readable storage medium is configured to store a computer program, and when the computer program is run on a computer, the computer is enabled to perform the method according to any one of claims 1 to 9 or the method according to any one of claims 10 to 13.

30. A computer program product, wherein the computer program product comprises a computer program, and when the computer program is run on a computer, the computer is enabled to perform the method according to any one of claims 1 to 9 or the method according to any one of claims 10 to 13.
